# EUROPÄISCHE PATENTSCHRIFT

(11) **EP 3 559 327 B1**
(45) Veröffentlichungstag und Bekanntmachung des Hinweises auf die Patenterteilung: **01.09.2021**
(21) Anmeldenummer: 17816643.5
(22) Anmeldetag: 07.12.2017
(51) Int. Cl.: D06F 33/00, D06F 39/00

(54) **VERFAHREN ZUR ERMITTLUNG VON BEHANDLUNGSPARAMETERN ÜBER EINEN INFORMATIONSTRÄGER**
METHOD FOR DETERMINING TREATMENT PARAMETERS BY MEANS OF AN INFORMATION CARRIER
PROCÉDÉ POUR DÉTERMINER DES PARAMÈTRES DE TRAITEMENT AU MOYEN D'UN SUPPORT D'INFORMATIONS

(30) Priorität: 21.12.2016 DE 102016225823
(43) Veröffentlichungstag der Anmeldung: 30.10.2019
(73) Patentinhaber: Henkel AG & Co. KGaA, 40589 Düsseldorf (DE)
(72) Erfinder: KESSLER, Arnd, 40789 Monheim am Rhein (DE); NITSCH, Christian, 40591 Düsseldorf (DE); ZÜCHNER, Lars, 40764 Langenfeld (DE); WAWER, Georg, 1040 Wien (AT); MÜLLER, Alexander, 40789 Monheim (DE); ARTH, Clemens, 8020 Graz (AT)
(86) Internationale Anmeldenummer: PCT/EP2017/081854
(87) Internationale Veröffentlichungsnummer: WO 2018/114361

(56) Entgegenhaltungen:
- EP-A1- 2 757 187
- CN-B- 103 820 971
- DE-U1-202008 001 532
- KR-A- 20080 060 806

## Beschreibung

### Gebiet der Erfindung

Die Erfindung betrifft Verfahren und Vorrichtungen, mit welchen über ein Bestimmen von einer Information indikativ für zumindest einen die Behandlung von Textilien beeinflussenden Parameter mindestens ein Behandlungsparameter zumindest teilweise basierend auf der Information ermittelt wird.

### Hintergrund der Erfindung

Textilien müssen bei Gebrauch regelmäßig einer Reinigungsbehandlung unterzogen werden. Der Benutzer wählt üblicherweise eine bestimmte Art der Behandlung mit entsprechenden Behandlungsparametern manuell aus. Behandlungsparameter können hierbei insbesondere die Reinigungsmittelart, Reinigungstemperatur, Reinigungsdauer, Reinigungsmitteldosierung, oder das durchzuführende Reinigungsprogramm sein.

Die Identifikation der Art der Behandlung der Textilie wird üblicherweise von einem Benutzer vorgenommen. Die für eine Behandlung optimalen Behandlungsparameter werden oft nach der Erfahrung des Benutzers und auf Grundlage von Markierungen an der Textilie, beispielsweise über Textilpflegezeichen auf einem an der Textilie angebrachten Etikett, nach deren Farbe und nach der Art des für den Benutzer verfügbaren Reinigungsmittels ermittelt.

Textilien umfassen hierbei insbesondere Kleidungsstücke, Gardinen oder Bettzeug. Kleidungsstücke und Bettzeug umfassen beispielsweise Hemden, T-Shirts, Kleider, Jacken, Pullover, Hosen, Decken, Abdeckungen und Bezüge. Die Textilien können verschiedene Materialien umfassen, beispielsweise Naturfasern, Chemiefasern oder auch weitere Materialien wie Leder.

Die Auswahl der Behandlung der Textilie durch den Benutzer kann jedoch zu suboptimalen Ergebnissen bis hin zu Fehlbehandlungen führen. Beispielsweise können Textilien ungeeigneten Reinigungsbehandlungen unterzogen werden, die insbesondere zu einem erhöhten Verbrauch von Ressourcen wie Reinigungsmittel und Wasser, aber auch zu einer unzureichenden Reinigungsleistung der Textilie führen können. Ferner kann ein falsch eingestellter Behandlungsparameter seitens des Benutzers, insbesondere eine zu hoch gewählte Temperatur, die Textilie beschädigen oder sogar zu einer Zerstörung der Textilie führen.

Dokument DE202008001532 U1 beschreibt ein System, das aus Behältern mit Reinigungsmitteln besteht, die mit RFID-Mitteln identifiziert werden, die durch Elemente an Koppelpunkten von Haushaltsgeräten gelesen werden können.

### Allgemeine Beschreibung einiger beispielhafter Ausführungsformen der Erfindung

Vor dem Hintergrund des dargestellten Stands der Technik ist es somit die Aufgabe der Erfindung, die beschriebenen Probleme zumindest teilweise zu verringern oder zu vermeiden, das heißt die Behandlung einer Textilie insbesondere hinsichtlich eines Waschverfahrens der Textilie zum einen zu vereinfachen und zum anderen an individuelle Begebenheiten besser anzupassen, so dass eine optimierte Behandlung der Textilie möglich ist.

Gemäß einem ersten Aspekt der Erfindung wird ein Verfahren gemäß Anspruch 1 durchgeführt. Beispielsweise ist ein Verfahren durchgeführt von einer oder mehreren Vorrichtungen beschrieben, das Verfahren umfassend: Bestimmen von einer Information indikativ für zumindest einen die Behandlung einer Textilie beeinflussenden Parameter, wobei die Information von einem Informationsträger eines Reinigungsmittels, der Textilie und/oder eines Reinigungsgerätes erfasst wird und der Informationsträger eine Verpackung, ein Etikett, einen NFC-Chip oder eine Kombination hiervon umfasst; Ermitteln von mindestens einem Behandlungsparameter der Textilie zumindest teilweise basierend auf der bestimmten Information; und Ausgeben oder Auslösen des Ausgebens des mindestens einen ermittelten Behandlungsparameters.

Gemäß einem zweiten Aspekt der Erfindung wird eine Vorrichtung beschrieben, welche dazu eingerichtet ist oder entsprechende Mittel umfasst, ein Verfahren nach dem ersten Aspekt durchzuführen und/oder zu steuern. Vorrichtungen des Verfahrens gemäß dem ersten Aspekt sind oder umfassen insbesondere eine oder mehrere Vorrichtungen gemäß dem zweiten Aspekt.

Eine Information indikativ für zumindest einen die Behandlung einer Textilie beeinflussenden Parameter wird bestimmt. Die Information wird von einem Informationsträger eines Reinigungsmittels, der Textilie und/oder eines Reinigungsgerätes erfasst. Es sind also sowohl die jeweiligen Alternativen als auch jede mögliche Kombination der Erfassung der zu bestimmenden Information von einem Informationsträger umfasst. Die Information kann beispielsweise von einem Informationsträger eines Reinigungsmittels erfasst werden. Zusätzlich oder alternativ kann die Information von einem Informationsträger der Textilie erfasst werden. Zudem kann die Information von einem Informationsträger eines Reinigungsgerätes erfasst werden. Die Information kann also separat von einem Informationsträger eines Reinigungsmittels, der Textilie oder eines Reinigungsgerätes erfasst werden. Weiterhin kann die Information jeweils von einem Informationsträger eines Reinigungsmittels und der Textilie, oder eines Reinigungsmittels und eines Reinigungsgerätes, oder der Textilie und eines Reinigungsgerätes, oder eines Reinigungsmittels und der Textilie und eines Reinigungsgerätes erfasst werden.

Der Informationsträger umfasst eine Verpackung, ein Etikett, einen NFC-Chip oder eine Kombination hiervon. Weiterhin kann der Informationsträger durch eine Verpackung, ein Etikett, einen NFC-Chip oder eine Kombination hiervon bereitgestellt sein. Ein NFC-Chip (NFC: Near Field Communication) kann beispielsweise einen RFID-Transponder (RFID: Radio Frequency Identification), auch als Funketikett bezeichnet, umfassen. Auf dem NFC-Chip können Informationen gespeichert werden, die ausgelesen werden können. Beispielsweise für den Fall, dass ein NFC-Chip auf einer Verpackung eines Reinigungsmittels angebracht ist, können auf dem NFC-Chip die dieses Reinigungsmittel kennzeichnenden Informationen, wie zum Beispiel die Zusammensetzung und/oder Haltbarkeit des Reinigungsmittels gespeichert sein. Ferner kann auf dem NFC-Chip eine eindeutige Kennung gespeichert sein. Die eindeutige Kennung kann beispielsweise einen Rückschluss auf die das Reinigungsmittel kennzeichnenden Informationen ermöglichen.

Ist der Informationsträger eine Verpackung, kann die Verpackung die Information, die indikativ für zumindest einen die Behandlung einer Textilie beeinflussenden Parameter ist, in Form von einer Schrift aufweisen. Alternativ oder zusätzlich kann die Verpackung die Information in Form eines Barcodes, zum Beispiel ein Strich-Barcode oder ein zweidimensionaler Barcode, aufweisen, wobei der Barcode beispielsweise auf der Verpackung aufgedruckt ist. Ferner kann die Verpackung alternativ oder zusätzlich einen NFC-Chip umfassen, auf welchem die Information gespeichert ist und von welchem, beispielsweise mittels einer geeigneten NFC-Leseeinrichtung, die Information ausgelesen werden kann.

Ist der Informationsträger ein Etikett, kann das Etikett die Information, die indikativ für zumindest einen die Behandlung einer Textilie beeinflussenden Parameter ist, in Form von einer Schrift aufweisen. Alternativ oder zusätzlich kann das Etikett die Information in Form eines Barcodes, zum Beispiel ein Strich-Barcode oder ein zweidimensionaler Barcode, aufweisen, wobei der Barcode beispielsweise auf das Etikett aufgedruckt ist. Ferner kann das Etikett alternativ oder zusätzlich einen NFC-Chip umfassen, auf welchem die Information gespeichert ist und von welchem, beispielsweise mittels einer geeigneten NFC-Leseeinrichtung, die Information ausgelesen werden kann.

Der mindestens eine Behandlungsparameter wird ausgegeben bzw. dessen Ausgabe veranlasst. Beispielsweise wird der mindestens eine Behandlungsparameter einem Benutzer auf einer Anzeigevorrichtung angezeigt, so dass dem Benutzer beispielsweise eine Empfehlung über eine optimale Behandlung der Textilie bereitgestellt wird, insbesondere visuell und/oder akustisch. Der Benutzer kann dann die Behandlung entsprechend dem auf der Anzeigevorrichtung angezeigten mindestens einen Behandlungsparameter durchführen Beispielsweise können dem Benutzer auch mehrere Sätze von Behandlungsparametern zur Verfügung gestellt werden (zum Beispiel durch eine Anzeige auf einer Anzeigevorrichtung), etwa Behandlungsparameter für besonders schonende, für besonders intensive und/oder für besonders energiesparende Behandlungen der Textilie.

Alternativ oder zusätzlich kann mindestens ein Behandlungsparameter an ein Reinigungsgerät übermittelt werden, so dass eine Durchführung einer Behandlung der Textilie als Aktion ausgelöst wird. Diese Aktion kann zum Beispiel ein Reinigungsgerät, wie etwa eine Waschmaschine ansteuern. Hierzu kann zum Beispiel der ermittelte mindestens eine Behandlungsparameter mittels einer entsprechend eingerichteten Kommunikationseinrichtung zu dem Reinigungsgerät übertragen werden, zum Beispiel mittels einer drahtgebundenen oder einer drahtlosen Kommunikationsverbindung. Die drahtlose Kommunikationsverbindung kann zum Beispiel gemäß dem Bluetooth oder dem WLAN-Standard ausgebildet sein. Beispielsweise kann der mindestens eine Behandlungsparameter an ein Reinigungsgerät übergeben werden, welche den entsprechenden Behandlungsparameter als Voreinstellung übernimmt und wobei der Benutzer das Reinigungsgerät lediglich starten muss. Ebenso ist es denkbar, dass das Reinigungsgerät mit der Ausgabe des mindestens einen Behandlungsparameters die Reinigungsbehandlung automatisch durchführt. Das Reinigungsgerät kann beispielsweise über eine Dosierungsvorrichtung für Reinigungsmittel verfügen, um die Reinigungsmittelart und Reinigungsmitteldosierung entsprechend der empfohlenen Behandlung auf Basis des mindestens einen Behandlungsparameters automatisch bereitzustellen. Im Ergebnis wird hiermit neben Benutzerfreundlichkeit des Verfahrens außerdem der Verbrauch von Ressourcen, wie dem zur Behandlung der Textilie eingesetzten Reinigungsmittel verbessert.

In einer nächsten Ausgestaltung des Verfahrens gemäß dem ersten Aspekt wird zur Bestimmung der Information mindestens ein optisches Sensorelement und/oder eine NFC-Leseeinrichtung verwendet. Entsprechend kann die Vorrichtung gemäß dem zweiten Aspekt ein optisches Sensorelement und/oder eine NFC-Leseeinrichtung aufweisen.

Unter einem optischen Sensor wird hierbei ein Sensor verstanden, welcher eine Intensität einfallender Strahlung, insbesondere elektromagnetischer Strahlung im sichtbaren Bereich und ggf. darüber hinaus, ermitteln kann. Der optische Sensor kann einen Bildsensor umfassen, insbesondere einen digitalen Bildsensor. Zur Ermittlung der einfallenden Strahlung kann insbesondere mindestens ein Halbleiterelement, Diode, CCD-Element, beispielsweise ein Bayer-Sensor, oder CMOS-Element verwendet werden. Der optische Sensor kann einen optischen Filter und insbesondere ein Spektrometer enthalten und/oder umfassen.

Denkbar ist ebenfalls die Verwendung von monochromen Sensoren ohne Farbauflösung. Ebenso können Sensoren verwendet werden, welche auf bestimmte Wellenlängenbereiche beschränkt sind, beispielsweise basierend auf mindestens einer Photodiode und/oder mindestens einem LED-Element.

In einer Ausgestaltung umfasst das mindestens eine optische Sensorelement mindestens ein kameraartiges Element und stellt eine Bildinformation von dem Informationsträger bereit.

Entsprechend können digitale Kameras oder in mobilen Geräten integrierte Kameras für das Verfahren herangezogen werden bzw. als mindestens eine Vorrichtung zur Durchführung des Verfahrens dienen.

Unter einer NFC-Leseeinrichtung wird hierbei eine Einrichtung verstanden, welche zum Auslesen von einer Information, die auf einem NFC-Chip speicherbar ist, verwendet werden kann. Zum Auslesen von einer Information des NFC-Chips können von der NFC-Leseeinrichtung magnetische Wechselfelder oder hochfrequente Radiowellen erzeugt werden. Diesen Wechselfeldern bzw. den hochfrequenten Radiowellen wird der NFC-Chip ausgesetzt, wobei der NFC-Chip zum Beispiel über eine integrierte Antenne das Wechselfeld bzw. die hochfrequenten Radiowellen in Form von Hochfrequenzenergie aufnimmt. Diese Hochfrequenzenergie kann der NFC-Chip als Stromversorgung für den NFC-Chip einsetzen. Derart wird der NFC-Chip aktiviert, so dass eine Kommunikation zwischen dem NFC-Chip und der NFC-Leseeinrichtung durchgeführt werden kann.

Gemäß einer Ausgestaltung des Verfahrens gemäß dem ersten Aspekt wird zum Ermitteln von mindestens einem Behandlungsparameter der Textilie die Bildinformation mittels einer Schrifterkennung verarbeitet. Hierzu kann in einer Ausgestaltung nach dem ersten Aspekt das Verfahren weiterhin ein Unterziehen der bestimmten Information einem Bearbeitungsalgorithmus umfassen.

Zur Ermittlung des mindestens einen Behandlungsparameters bzw. zur Analyse der Bildinformation kann insbesondere eine Auswertung von Schrift, die von dem Informationsträger umfasst ist, vorgenommen werden. Beispielsweise kann hierzu ein sogenanntes OCR-Verfahren (OCR: Optical Character Recognition) angewendet werden. Zum Beispiel wird mit dem kameraartigen Element des mindestens einen optischen Sensorelementes eine Bildinformation erfasst. Aus der Bildinformation wird eine digitale Repräsentation von verschrifteter Information gewonnen. Die Bildinformation kann beispielsweise die Verpackung, oder eine auf der Verpackung abgebildete Inhaltsbeschreibung repräsentieren. Mittels des OCR-Verfahrens wird aus der (digitalen) Bildinformation zumindest eine Information, wie zum Beispiel die Haltbarkeit und/oder die Zusammensetzung des Reinigungsmittels herausgelesen.

In einer weiteren Ausgestaltungwird zum Ermitteln von mindestens einem Behandlungsparameter der Textilie die Bildinformation mittels einer Barcodeerkennung verarbeitet. Entsprechend kann die Vorrichtung gemäß dem zweiten Aspekt ein optisches Sensorelement und/oder eine NFC-Leseeinrichtung aufweisen.

Der Barcode kann beispielsweise auf dem Informationsträger abgebildet sein, insbesondere auf einer Verpackung oder auf einem Etikett, welche jeweils von dem Informationsträger umfasst sein kann. Als Barcode kann zum Beispiel ein Strichcode oder ein zweidimensionaler Barcode zum Einsatz kommen. Ein Strichcode besteht aus parallelen Strichen unterschiedlicher Breite, wodurch die Striche des Strichcodes binäre Symbole darstellen. Entsprechend kann ein Auslesen des Strichcodes beispielsweise zu einer Information führen. Über einen Abgleich dieser Information mit in einer Datenbank hinterlegten Informationen kann beispielsweise die Information bestimmt werden. Zum Beispiel ist der Strichcode indikativ für eine eindeutige Kennung. In der Datenbank sind zu dieser Kennung Informationen zum Beispiel hinsichtlich einer Zusammensetzung und einer Haltbarkeit eines Reinigungsmittels hinterlegt. Wird der Strichcode von einem Informationsträger einer Textilie erfasst, kann der Strichcode indikativ für eine Oberflächeneigenschaft, Farbe der Textilie oder eine Kombination hiervon sein.

Als Barcode kann ferner zum Beispiel ein zweidimensionaler Barcode zum Einsatz kommen. Zweidimensionale Barcodes codieren zumindest eine Information in einer Fläche in Form von weißen und schwarzen Quadraten. Im Gegensatz zum Stichcode umfasst der zweidimensionale Barcode binäre Symbole in zwei Dimensionen, was eine höhere Dichte an Informationen, die in dem zweidimensionalen Barcode umfasst sind, ermöglicht. Die zuvor im Zusammenhang mit einem Strichcode gemachten Ausführungen gelten analog auch bei zweidimensionalen Barcodes.

In einer weiteren Ausgestaltung nach dem ersten Aspekt wird die NFC-Leseeinrichtung gemäß dem NFC-Standard betrieben.

Eine weitere Ausgestaltung gemäß dem ersten Aspekt sieht vor, dass die Information indikativ für eine Zusammensetzung eines Reinigungsmittels, eine Haltbarkeitsdauer eines Reinigungsmittels oder eine Kombination hiervon ist.

Reinigungsmittel werden beispielsweise im Haushalt für die Reinigung unterschiedlicher Objekte eingesetzt. Beispielsweise wird für Waschmaschinen ein Reinigungsmittel, zum Beispiel ein Waschmittel, für die Reinigung von Textilien eingesetzt. Unter einem Reinigungsmittel sollen jedoch ebenfalls auch Reinigungshilfsmittel oder Reinigungszusatzmittel, wie beispielsweise ein Bleichzusatzmittel, ein Weichspüler oder Wäschestärke, verstanden werden. Ein Reinigungsmittel kann zudem eine Flüssigkeit, ein disperses System, zum Beispiel ein Gel oder Schaum, oder ein Feststoff, insbesondere ein Tab, Pulver oder Granulat, sein.

Ein Reinigungsmittel kann beispielsweise eine oder mehrere Komponenten aus der Gruppe von Komponenten umfassend Tenside, Alkalien, Builder, Vergrauungsinhibatoren, optische Aufheller, Enzyme, Bleichmittel, Soil-Release-Polymere, Füller, Weichmacher, Duftstoffe, Farbstoffe, Pflegestoffe, Säuren, Stärke, Isomalt, Zucker, Zellulose, Zellulosederivate, Carboxymethylcellulose, Polyetherimid, Silikonderivate und/oder Polymethylimine aufweisen.

Ein Reinigungsmittel kann ferner einen oder mehrere weitere Bestandteile umfassen. Diese Bestandteile schließen ein, sind aber nicht beschränkt auf die Gruppe bestehend aus Bleichaktivatoren, Komplexbildnern, Gerüststoffen, Elektrolyten, nichtwässrigen Lösungsmitteln, pH-Stellmitteln, Parfümträgern, Fluoreszenzmitteln, Hydrotropen, Silikonölen, Bentoniten, Antiredepositionsmitteln, Einlaufverhinderern, Knitterschutzmitteln, Farbübertragungsinhibitoren, , antimikrobiellen Wirkstoffen, Germiziden, Fungiziden, Antioxidantien, Konservierungsmitteln, Korrosionsinhibitoren, Antistatika, Bittermitteln, Bügelhilfsmitteln, Phobier- oder Imprägniermitteln, Quell- oder Schiebefestmitteln und/oder UV-Absorbern.

Die bestimmte Information kann die Zusammensetzung eines Reinigungsmittels repräsentieren und somit indikativ für die Zusammensetzung eines empfohlenen Reinigungsmittels sein. Wenn beispielsweise anhand der Zusammensetzung des Reinigungsmittels erkannt wird, dass dieses ein schonendes Reinigungsmittel ist, kann dem Benutzer die Verwendung dieses Reinigungsmittels zum Beispiel zur Anwendung bei einer Textilie empfohlen werden, die einen gewissen Anteil Wolle oder entsprechende Wollapplikationen auf der Textilie enthält. Wenn beispielsweise neben der Zusammensetzung des Reinigungsmittels die bestimmte Information indikativ für eine Haltbarkeitsdauer des Reinigungsmittels ist, kann entsprechend ausgewertet werden, ob die im Zusammenhang mit der Zusammensetzung des Reinigungsmittels stehenden Eigenschaften des Reinigungsmittels, zum Beispiel schonendes Reinigungsmittel, diese Eigenschaften realisieren können. Denn wenn zum Beispiel die Haltbarkeitsdauer des Reinigungsmittels abgelaufen ist, könnte dem Benutzer empfohlen werden, von der Verwendung des Reinigungsmittels abzusehen.

Eine weitere Ausgestaltung gemäß dem ersten Aspekt sieht vor, dass die bestimmte Information indikativ für eine Oberflächeneigenschaft der Textilie ist.

Unter einer Oberflächeneigenschaft der Textilie wird unter anderem deren Materialart und/oder die Materialstruktur der Textilie verstanden.

Unter der Materialstruktur der Textilie wird insbesondere die Art und/oder Form eines Gewebes, einer Maschenware oder Vliesstoff bzw. Faserflor verstanden. Die entsprechende Oberflächeneigenschaft kann insbesondere charakteristisch für die Art der Verpflechtung von Fasern, wie diese beispielsweise über ein Weben, Wirken oder Stricken hergestellt wurde, oder charakteristisch für einen Vliesstoff sein. Ein Verpflechtungsmuster bzw. ein Fadenverkreuzungsmuster und eine Fadenbindung können hierbei von der Oberflächeneigenschaft umfasst werden. Fadendichte, Faserstärke, Faserlänge, Faserfeinheit und/oder Faserorientierung können insbesondere in der bestimmten Information von einem Informationsträger der Textilie erfasst sein. Die Materialstruktur der Textilie hat einen direkten Einfluss auf die Anforderungen an die Behandlung der Textilie, beispielsweise kann eine Maschenware aus Wolle andere Anforderungen an eine Reinigungsbehandlung stellen als ein Vliesstoff.

Unter der Materialart wird insbesondere die Zusammensetzung zumindest eines Teils des Materials der Textilie verstanden. Beispielsweise ist die Oberflächeneigenschaft der Textilie indikativ für Naturfasern, Chemiefasern oder natürliche Materialien wie Wolle oder Leder in der Textilie. Die Materialart hat ebenso erheblichen Einfluss auf eine optimale Behandlung der Textilie, wie zum Beispiel eine Reinigungsbehandlung.

Wenn beispielsweise anhand der bestimmten Information eine Oberflächeneigenschaft der Textilie erkannt wird, die charakteristisch für eine Maschenware aus Wolle ist, kann nach dem entsprechenden Ermitteln von mindestens einem Behandlungsparameter der Textilie basierend auf dieser Information dem Benutzer empfohlen werden, ein schonendes Reinigungsmittel zu verwenden.

Wird zudem anhand der bestimmten Information zusätzlich erkannt, dass die Zusammensetzung des Reinigungsmittels auf ein schonendes Reinigungsmittel schließen lässt, kann dem Benutzer die Verwendung des vorliegenden Reinigungsmittels für eine Reinigungsbehandlung der vorliegenden Textilie empfohlen werden. Lässt sich hingehen aus der bestimmten Information darauf schließen, dass die Zusammensetzung des Reinigungsmittels sich nicht zur Reinigungsbehandlung von zu schonenden Textilien eignet, kann dem Benutzer eine Verwendung des vorliegenden Reinigungsmittels zur Behandlung der vorliegenden Textilie nicht empfohlen werden.

Eine weitere Ausgestaltung gemäß dem ersten Aspekt sieht vor, dass die bestimmte Information indikativ für einen Typ eines Reinigungsgerätes ist.

Unter einem Reinigungsgerät wird insbesondere eine Waschmaschine, insbesondere automatische Haushaltswaschmaschine verstanden. Hierbei kann die bestimmte Information einen Typ eines solchen Reinigungsgerätes angeben. Die bestimmte Information, die insbesondere von einem Informationsträger eines Reinigungsgerätes erfasst wird, kann Einstellungen des Reinigungsgerätes umfassen, beispielsweise ein Programm einer automatischen Haushaltswaschmaschine oder eine Sequenz solcher Programme. Die jeweilige Dauer eines Programms oder einer Sequenz solcher Programme kann ebenfalls von der Information, die von einem Informationsträger eines Reinigungsgerätes erfasst werden kann, umfasst sein.

Eine Ausgestaltung gemäß dem ersten Aspekt sieht vor, dass der mindestens eine Behandlungsparameter indikativ für eine Empfehlung bzw. Beeinflussung einer Reinigungsmittelart, Reinigungstemperatur, Reinigungsdauer, Reinigungsmitteldosierung, eines Zeitpunktes zur Anwendung des Reinigungsmittels, eines Reinigungsprogramms oder eine Kombination hiervon ist.

Der mindestens eine Behandlungsparameter kann die Reinigungsmittelart repräsentieren, insbesondere eine Zusammensetzung eines Reinigungsmittels angeben, der auf Basis von der bestimmten Information einem Benutzer empfohlen bzw. verwendet werden kann.

Der mindestens eine Behandlungsparameter kann die Reinigungstemperatur repräsentieren. Insbesondere kann die Reinigungstemperatur von einem Informationsträger einer Textilie erfasst werden. Entsprechend kann der mindestens eine Behandlungsparameter eine Reinigungstemperatur repräsentieren, die bei der Behandlung der Textilie gewählt wird und sicherstellt, dass keine Schäden im Rahmen der Behandlung an der Textilie durch eine fehlerhaft gewählte Temperatur entstehen können. Mit einem für die Reinigungstemperatur repräsentativen Behandlungsparameter kann eine für die Textilie optimale Temperatur zur Reinigung angeben werden. Insbesondere in Kombination mit einer Reinigungsmittelart kann eine besonders optimierte Behandlung der Textilie hinsichtlich Schonung der Textilie, optimiertem Reinigungsergebnis und Schonung von Ressourcenverbrauch, wie Reinigungsmittelmenge und Wasser erfolgen. Die Reinigungstemperatur kann hierbei einerseits hoch genug sein, um eine möglichst vollständige Reinigung der Textilie zu gewährleisten und anderseits im Hinblick auf den Energieaufwand und einer Schonung der Textilie niedrig gehalten werden.

Der mindestens eine Behandlungsparameter kann die Reinigungsdauer repräsentieren, insbesondere in Kombination mit einer Reinigungsmittelart und einer Reinigungstemperatur. Die Reinigungsdauer kann einerseits lang genug sein, um eine möglichst vollständige Reinigung ermöglichen zu können, und andererseits kurz gewählt werden, um eine Belastung der Textilie während der Behandlung durch eine lange Reinigungsdauer möglichst gering zu halten.

Der mindestens eine Behandlungsparameter kann die Reinigungsmitteldosierung repräsentieren und insbesondere eine absolute Menge von Reinigungsmittel angeben. Ebenso kann eine relative Menge des Reinigungsmittels mittels des mindestens einen Behandlungsparameters angezeigt werden, beispielsweise bezogen auf ein zur Reinigung einzusetzendes Wasservolumen.

Der mindestens eine Behandlungsparameter kann den Zeitpunkt zur Anwendung des Reinigungsmittels repräsentieren, zum Beispiel ob das Reinigungsmittel vor, während oder nach einem Waschzyklus eines Reinigungsprogramms, der beispielsweise von einem Reinigungsgerät durchgeführt wird, zugegeben wird. Insbesondere in Kombination von einem oder mehreren der Empfehlungen bzw. Beeinflussungen (i) Reinigungsmittelart, (ii) Reinigungstemperatur, (iii) Reinigungsdauer, (iv) Reinigungsmitteldosierung kann hierbei eine optimale Behandlung, zum Beispiel möglichst vollständige Reinigung der Textilie erreicht werden.

Der mindestens eine Behandlungsparameter kann ein Reinigungsprogramm repräsentieren, insbesondere hinsichtlich einer bestimmten Information, die von einem Informationsträger eines Reinigungsgerätes erfasst wurde. Bei Kenntnis der verfügbaren Reinigungsprogramme eines Reinigungsgerätes kann entsprechend dasjenige Programm dem Benutzer empfohlen bzw. unmittelbar ein Reinigungsgerät zur Wahl des Reinigungsprogramms beeinflusst werden, dass ein möglichst optimales Reinigungsergebnis auf Basis des bestimmten mindestens einen Behandlungsparameters ermöglicht. Wird beispielsweise eine Information von einem Informationsträger eines Reinigungsgerätes bestimmt, und zusätzlich eine Information von einem Informationsträger eines Reinigungsmittels, kann aus dieser Kombination beispielsweise von Zusammensetzung und Haltbarkeit des Reinigungsmittels und den verfügbaren Reinigungsprogrammen des Reinigungsgerätes derjenige mindestens eine Behandlungsparameter auf Basis dieser Kombination ermittelt werden, der ein optimales, d.h. zum Beispiel möglichst vollständiges Reinigungsergebnis der Textilie ermöglicht. Wird zusätzlich eine Information bestimmt, die von einem Informationsträger der Textilie erfasst wurde, kann auch diese bestimmte Information berücksichtigt werden für die Empfehlung an den Benutzer bzw. Beeinflussung eines Reinigungsgerätes zur Durchführung der Behandlung einer Textilie. Beispielsweise kann es sich bei der Textile um eine zu schonende Textilie handeln, so dass als Reinigungsprogramm eines von kurzer Dauer gewählt wird. Handelt es sich beispielsweise um eine Textilie, die eine robuste Materialstruktur aufweist, kann ein Reinigungsprogramm von langer Dauer gewählt werden. Diese beiden vorstehenden Beispiele sind unter der Annahme, dass dasselbe Reinigungsmittel zur Behandlung der Textilie auf Basis der bestimmten Information verwendet werden soll.

In einer weiteren Ausgestaltung umfasst das Verfahren weiterhin: Durchführen oder Veranlassung der Durchführung einer Behandlung der Textilie entsprechend dem mindestens einen ermittelten Behandlungsparameter mittels eines Reinigungsgerätes.

In einer weiteren Ausgestaltung des Verfahrens gemäß dem ersten Aspekt wird die Information vor, während und/oder nach einer Behandlung der Textilie bestimmt. Bei einem Bestimmen der Information vor oder während der Behandlung der Textilie kann die Behandlung beispielsweise dynamisch durchgeführt werden, d.h. ein Reinigungsgerät kann sich während der Behandlung an die gerade zu behandelnde Textilie anpassen, insbesondere indem Behandlungsparameter kontinuierlich ermittelt werden.

In einer weiteren Ausgestaltung des Verfahrens ist mindestens eine der Vorrichtungen zur Durchführung des Verfahrens ein mobiles Gerät und/oder ein von einem Reinigungsgerät umfasstes Modul. Insbesondere kann eine Kommunikation über ein Kommunikationssystem zwischen einem mobilen Gerät, beispielsweise einem Smartphone, Laptop, Tablet, Wearable oder einer Kamera, und mindestens einer weiteren Vorrichtung vorgenommen werden, beispielsweise einem Reinigungsgerät. In einer alternativen Ausgestaltung des Verfahrens ist mindestens eine der Vorrichtungen zur Durchführung des Verfahrens an einem Reinigungsgerät angeordnet oder von einem Reinigungsgerät umfasst. Entsprechend kann ein bereits vorhandenes Reinigungsgerät mit mindestens einer Vorrichtung zur Durchführung des Verfahrens nachgerüstet werden. Weiterhin kann ein Reinigungsgerät mindestens eine Vorrichtung zur Durchführung des Verfahrens umfassen. Zum Beispiel kann eine derartige Vorrichtung in einem Reinigungsgerät implementiert sein. Beispielsweise ist ein Einbau einer derartigen Vorrichtung in eine Einspülkammer eines Reinigungsgerätes denkbar. Zum Bestimmen der Information kann das Reinigungsgerät entsprechend mit mindestens einem optischen Sensorelement und/oder einer NFC-Leseeinrichtung ausgestattet sein. Beispielsweise kann das mindestens eine optische Sensorelement und/der die NFC-Leseeinrichtung in einer Frontblende des Reinigungsgerät integriert sein.

Gemäß einer Ausgestaltung umfasst die Vorrichtung gemäß dem zweiten Aspekt eine Kommunikationsschnittstelle. Beispielsweise ist die Kommunikationsschnittstelle für eine drahtgebundene oder drahtlose Kommunikation eingerichtet. Beispielsweise ist die Kommunikationsschnittstelle eine Netzwerkschnittstelle. Die Kommunikationsschnittstelle ist bevorzugt dazu eingerichtet mit einem Kommunikationssystem zu kommunizieren. Beispiele für ein Kommunikationssystem sind ein lokales Netzwerk (LAN), ein großräumiges Netzwerk (WAN), ein drahtloses Netzwerk (beispielsweise gemäß dem IEEE-802.11-Standard, dem Bluetooth (LE)-Standard und/oder dem NFC-Standard), ein drahtgebundenes Netzwerk, ein Mobilfunknetzwerk, ein Telefonnetzwerk und/oder das Internet. Ein Kommunikationssystem kann die Kommunikation mit einem externen Computer umfassen, beispielsweise über eine Internetverbindung.

In einer Ausgestaltung des Verfahrens umfasst das Ermitteln des mindestens einen Behandlungsparameters einen Vergleich der bestimmten Information mit Vergleichswerten. Entsprechende Vergleichswerte können in einer Datenbank hinterlegt sein. Die bestimmte Information kann einer Klassifizierung unterzogen werden, wobei der mindestens eine Behandlungsparameter durch ein Ergebnis der Klassifizierung erhalten oder beeinflusst wird. Eine Klassifizierung kann beispielsweise auf einem Vergleich der bestimmten Information mit einer Datenbank von bereits bekannten Informationen beruhen. Weiter können den entsprechenden Vergleichswerten bestimmte Behandlungsparameter zugeordnet sein.

Die Auswertung der bestimmten Information bzw. das Ermitteln des mindestens einen Behandlungsparameters kann hierbei mit der Vorrichtung, die das mindestens einen optischen Sensorelement und/oder die NFC-Leseeinrichtung aufweist, durchgeführt werden. Beispielsweise ist das mindestens eine optische Sensorelement und/oder die NFC-Leseeinrichtung an einem mobilen Gerät oder an einem Reinigungsgerät angeordnet bzw. integriert. Die gleiche Vorrichtung kann ebenso eine Auswerteeinheit aufweisen, welche das Ermitteln des mindestens einen Behandlungsparameters durchführt oder veranlasst.

Ebenso kann die Auswertung der Information bzw. das Ermitteln des mindestens einen Behandlungsparameters von einer weiteren Vorrichtung vorgenommen werden, welche insbesondere über ein Kommunikationssystem mit der Vorrichtung, welche den Struktursensor aufweist, in Verbindung steht. Hierfür kann ein Server vorgesehen sein, welcher die Auswertung ausführt oder weitere Vorrichtungen veranlasst, die Auswertung durchzuführen. Ein solcher Server ist beispielsweise ein Datenbankserver. Beispiele eines Datenbankservers umfassen Microsoft SQL Server, Oracle Server und MySQL Server. Die Server können beispielsweise ein Teil bzw. eine Komponente einer sogenannten Computer Cloud sein, welche Datenverarbeitungsressourcen dynamisch für verschiedene Nutzer in einem Kommunikationssystem bereitstellt. Unter einer Computer Cloud wird insbesondere eine Datenverarbeitungs-Infrastruktur gemäß der Definition des "National Institute for Standards and Technology" (NIST) für den englischen Begriff "Cloud Computing" verstanden. Ein Beispiel einer Computer Cloud ist eine Microsoft Windows Azure Platform.

Gemäß dem zweiten Aspekt der Erfindung wird auch eine alternative Vorrichtung beschrieben, umfassend zumindest einen Prozessor und zumindest einen Speicher mit Computerprogrammcode, wobei der zumindest eine Speicher und der Computerprogrammcode dazu eingerichtet sind, mit dem zumindest einen Prozessor zumindest ein Verfahren gemäß dem ersten Aspekt auszuführen und/oder zu steuern. Unter einem Prozessor soll zum Beispiel eine Kontrolleinheit, ein Mikroprozessor, eine Mikrokontrolleinheit wie ein Mikrocontroller, ein digitaler Signalprozessor (DSP), eine anwendungsspezifische Integrierte Schaltung (ASIC) oder ein Field Programmable Gate Arrays (FPGA) verstanden werden.

Zum Beispiel umfasst eine beispielhafte Vorrichtung ferner Mittel zum Speichern von Informationen wie einen Programmspeicher und/oder einen Hauptspeicher. Zum Beispiel umfasst eine beispielhafte erfindungsgemäße Vorrichtung ferner jeweils Mittel zum Empfangen und/oder Senden von Informationen über ein Netzwerk wie eine Netzwerkschnittstelle. Zum Beispiel sind beispielhafte erfindungsgemäße Vorrichtungen über ein oder mehrere Netzwerke miteinander verbunden und/oder verbindbar.

Eine beispielhafte Vorrichtung gemäß dem zweiten Aspekt ist oder umfasst etwa eine Datenverarbeitungsanlage, die softwaremäßig und/oder hardwaremäßig eingerichtet ist, um die jeweiligen Schritte eines beispielhaften Verfahrens gemäß dem ersten Aspekt ausführen zu können. Beispiele für eine Datenverarbeitungsanlage sind ein Computer, ein Desktop-Computer, ein Server, ein Thinclient und/oder ein tragbarer Computer (Mobilgerät), wie etwa ein Laptop-Computer, ein Tablet-Computer, ein Wearable, ein persönlicher digitaler Assistent oder ein Smartphone.

Gemäß dem zweiten Aspekt der Erfindung wird auch ein Computerprogramm beschrieben, das Programmanweisungen umfasst, die einen Prozessor zur Ausführung und/oder Steuerung eines Verfahrens gemäß dem ersten Aspekt veranlassen, wenn das Computerprogramm auf dem Prozessor läuft. Ein beispielhaftes Programm gemäß der Erfindung kann in oder auf einem computerlesbaren Speichermedium gespeichert sein, welches eines oder mehrere Programme enthält.

Gemäß dem zweiten Aspekt der Erfindung wird auch ein computerlesbares Speichermedium beschrieben, welches ein Computerprogramm gemäß dem zweiten Aspekt enthält. Ein computerlesbares Speichermedium kann z.B. als magnetisches, elektrisches, elektromagnetisches, optisches und/oder andersartiges Speichermedium ausgebildet sein. Ein solches computerlesbares Speichermedium ist vorzugsweise gegenständlich (also "berührbar"), zum Beispiel ist es als Datenträgervorrichtung ausgebildet. Eine solche Datenträgervorrichtung ist beispielsweise tragbar oder in einer Vorrichtung fest installiert. Beispiele für eine solche Datenträgervorrichtung sind flüchtige oder nicht-flüchtige Speicher mit wahlfreiem-Zugriff (RAM) wie z.B. NOR-Flash-Speicher oder mit sequentiellen-Zugriff wie NAND-Flash-Speicher und/oder Speicher mit Nur-Lese-Zugriff (ROM) oder Schreib-Lese-Zugriff. Computerlesbar soll zum Beispiel so verstanden werden, dass das Speichermedium von einem Computer bzw. einer Datenverarbeitungsanlage (aus)gelesen und/oder beschrieben werden kann, beispielsweise von einem Prozessor.

Gemäß einem dritten Beispiel wird auch ein System beschrieben, umfassend mehrere Vorrichtungen, insbesondere ein mobiles Gerät nach dem ersten Aspekt oder ein in einem Reinigungsgerät anordenbares Modul nach dem ersten Aspekt oder ein in einem Reinigungsgerät integriertes Modul nach dem ersten Aspekt und ein Reinigungsgerät, welche zusammen ein Verfahren gemäß dem ersten Aspekt durchführen.

Ein beispielhaftes System gemäß dem dritten Beispiel umfasst ein beispielhaftes Reinigungsgerät und zusätzlich eine weitere Vorrichtung, beispielsweise ein mobiles Gerät oder ein in einem Reinigungsgerät anordenbares Modul oder ein in einem Reinigungsgerät integriertes Modul oder einen Server zur Durchführung eines beispielhaften Verfahrens gemäß dem ersten Aspekt.

Insbesondere kann das System gemäß dem dritten Aspekt auch weiter mindestens eine Textilie bzw. einen Satz von Textilien umfassen. Weiterhin kann das System gemäß dem dritten Beispiel zusätzlich oder alternativ ein Reinigungsmittel umfassen.

Die zuvor in dieser Beschreibung beschriebenen beispielhaften Ausgestaltungen der vorliegenden Erfindung sollen auch in allen Kombinationen miteinander offenbart verstanden werden. Insbesondere sollen beispielhafte Ausgestaltungen in Bezug auf die unterschiedlichen Aspekten offenbart verstanden werden.

Insbesondere sollen durch die vorherige oder folgende Beschreibung von Verfahrensschritten gemäß bevorzugter Ausführungsformen eines Verfahrens auch entsprechende Mittel zur Durchführung der Verfahrensschritte durch bevorzugte Ausführungsformen einer Vorrichtung offenbart sein. Ebenfalls soll durch die Offenbarung von Mitteln einer Vorrichtung zur Durchführung eines Verfahrensschrittes auch der entsprechende Verfahrensschritt offenbart sein.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Figuren

In der Zeichnung zeigt
- Fig. 1: ein Ablaufdiagramm eines Ausführungsbeispiels eines Verfahrens;
- Fig. 2a: eine schematische Darstellung eines Ausführungsbeispiels eines Systems;
- Fig. 2b: eine schematische Darstellung eines weiteren Ausführungsbeispiels eines Systems; und
- Fig. 3: ein Blockdiagramm eines Ausführungsbeispiels einer Vorrichtung.

### Detaillierte Beschreibung einiger beispielhafter Ausführungsformen der Erfindung

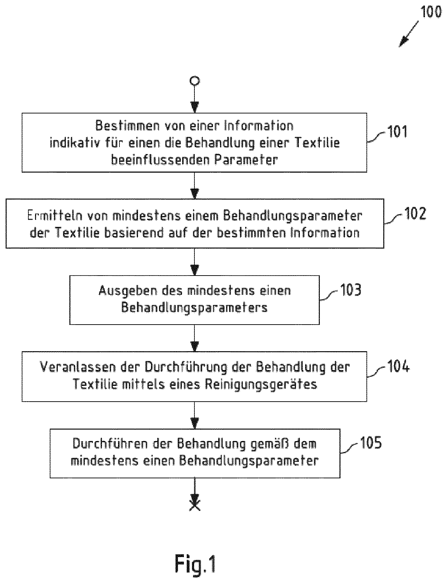

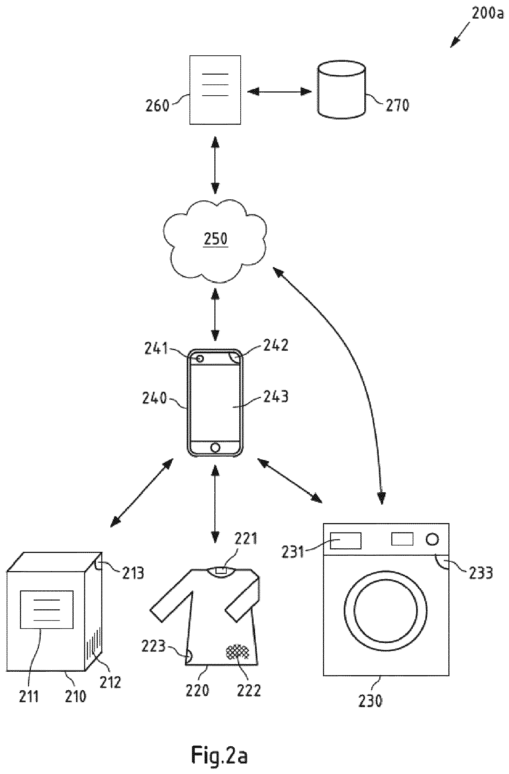

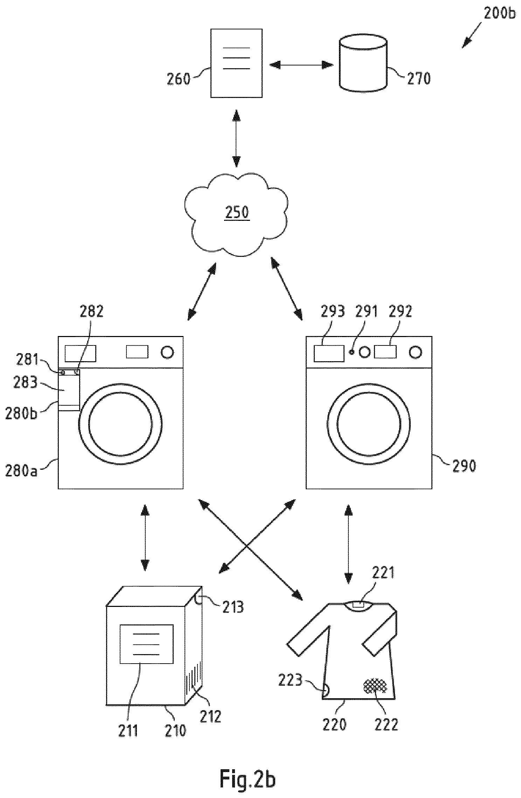

Fig.1 zeigt ein Ablaufdiagramm 100 eines Ausführungsbeispiels eines Verfahrens gemäß dem ersten Aspekt, welches durch eine Vorrichtung, beispielsweise Vorrichtung 240 aus Fig. 2 durchgeführt werden kann.

In Schritt 101 erfolgt ein Bestimmen von einer Information indikativ für zumindest einen die Behandlung einer Textilie beeinflussenden Parameter. Die Information wird dabei beispielsweise von einem Informationsträger, zum Beispiel Informationsträger 211, 212, 213 einer Verpackung eines Reinigungsmittels 210, und/oder Informationsträger 221, 222, 223 einer Textilie 220, und/oder Informationsträger 231, 233 eines Reinigungsgerätes 230 nach Fig. 2, erfasst. Der Informationsträger kann beispielsweise eine Verpackung bzw. der Aufdruck auf einer Verpackung eines Reinigungsmittels, ein Etikett bzw. der Aufdruck auf einem Etikett, ein NFC-Chip oder eine Kombination hiervon sein.

Beispielsweise ist die bestimmte Information indikativ für eine Zusammensetzung des Reinigungsmittels, eine Haltbarkeitsdauer eines Reinigungsmittels oder eine Kombination hiervon. Insbesondere ist die bestimmte Information indikativ für eine Zusammensetzung des Reinigungsmittels und/oder eine Haltbarkeitsdauer eines Reinigungsmittels für den Fall, dass die Information von einem Informationsträger, der zum Beispiel auf der Verpackung eines Reinigungsmittels, wie zum Beispiel die Verpackung des Reinigungsmittels 210 nach Fig. 2, angeordnet ist und erfasst wird.

Weiterhin kann die bestimmte Information indikativ für eine Oberflächeneigenschaft der Textilie sein. Insbesondere kann die bestimmte Information indikativ für eine Oberflächeneigenschaft der Textilie sein, wenn die Information von einem an der Textilie angeordneten Informationsträger, zum Beispiel Informationsträger 221, 222, 223 der Textilie 220 gemäß Fig. 2, erfasst wird. Dabei kann die bestimmte Information charakteristisch für eine Oberflächeneigenschaft, wie zum Beispiel eine Materialart der Textilie, eine Materialstruktur der Textilie oder eine Kombination hiervon sein.

Zusätzlich oder alternativ kann die bestimmte Information zum Beispiel indikativ für einen Typ eines Reinigungsgerätes sein, insbesondere wenn die bestimmte Information von einem Informationsträger eines Reinigungsgerät, zum Beispiel Reinigungsgerät 230 nach Fig. 2 erfasst wird.

In Schritt 102 erfolgt ein Ermitteln von mindestens einem Behandlungsparameter der Textilie zumindest teilweise basierend auf der bestimmten Information. Der mindestens eine Behandlungsparameter kann indikativ für eine Empfehlung bzw. Beeinflussung einer Reinigungsmittelart, Reinigungstemperatur, Reinigungsdauer, Reinigungsmitteldosierung, eines Zeitpunktes zur Anwendung des Reinigungsmittels, eines Reinigungsprogramms oder eine Kombination hiervon sein. Unter einer Beeinflussung kann zum Beispiel ein Veranlassen der Durchführung der Behandlung einer Textilie verstanden werden, wobei beispielsweise ein Reinigungsgerät (zum Beispiel das Reinigungsgerät 230 gemäß Fig. 2) auf Basis des mindestens einen Behandlungsparameters indikativ für eine Reinigungsmittelart das entsprechende Reinigungsmittel zur Behandlung der Textilie auswählt. Dabei kann beispielsweise das Reinigungsgerät ein oder mehrere verschiedene Reinigungsmittelarten bevorraten, die beispielsweise zumindest teilautomatisch zur Behandlung der Textilie von dem Reinigungsgerät verwendet werden können. Entsprechend kann eine Beeinflussung basierend auf dem mindestens einen Behandlungsparameter eines Reinigungsgerätes gemäß der Reinigungstemperatur, Reinigungsdauer, Reinigungsmitteldosierung, Zeitpunkt zur Anwendung des Reinigungsmittels oder eines zur Behandlung der Textilie verwendeten Reinigungsprogramms bzw. einer Sequenz von mehreren solcher Reinigungsprogramme durchgeführt werden.

In Schritt 103 erfolgt ein Ausgeben des mindestens einen ermittelten Behandlungsparameters. Alternativ oder zusätzlich kann ein Auslösen eines Ausgebens des mindestens einen ermittelten Behandlungsparameters erfolgen. Beispielsweise kann der ermittelte Behandlungsparameter auf einer Anzeigevorrichtung, zum Beispiel Display 243 der Vorrichtung 240 gemäß Fig. 2 ausgegeben werden. Die Ausgabe kann zum Beispiel eine Empfehlung für die Behandlung der Textilie an einen Benutzer darstellen. Dem Benutzer kann beispielsweise die Materialart der Textilie, ein Reinigungsmittel und ein zu verwendendes Reinigungsprogramm für ein Reinigungsgerät angezeigt werden. Weiterhin können dem Benutzer Sätze von Behandlungsparametern für zum Beispiel eine Vorbehandlung, eine Reinigungsbehandlung und eine Endbehandlung der Textilie angezeigt werden. Für den Benutzer wird damit die Ermittlung der optimalen Behandlung der Textilie erleichtert bzw. ermöglicht. Der Benutzer kann beispielsweise im Anschluss entscheiden, ob die Behandlungsparameter wie empfohlen übernommen werden sollen und eine Behandlung durchführen. Der mindestens eine ermittelte Behandlungsparameter ist basierend auf der bestimmten Information derart optimiert ermittelt, dass insbesondere Ressourcen in Bezug auf den Verbrauch von Reinigungsmittel und/oder den bei der Behandlung der Textilie benötigten Wasserverbrauch geschont bzw. deren Verbrauch minimiert wird.

In Schritt 104 erfolgt ein Veranlassen der Durchführung der Behandlung der Textilie mittels eines Reinigungsgerätes, zum Beispiel Reinigungsgerät 230 nach Fig. 2. Beispielsweise kann über ein Kommunikationssystem der mindestens eine ermittelte Behandlungsparameter an das Reinigungsgerät übermittelt werden, so dass das Reinigungsgerät entsprechend dem mindestens einen ermittelten Behandlungsparameter beispielsweise ein Reinigungsprogramm, eine zu verwendende Reinigungsmittelart, sowie dessen Dosierung zur Behandlung der Textilie auswählen und entsprechend die Durchführung veranlassen.

In Schritt 105 erfolgt ein Durchführen der Behandlung der Textilie gemäß dem mindestens einen Behandlungsparameter.

Fig. 2a zeigt ein Ausführungsbeispiel von Vorrichtungen gemäß dem zweiten Aspekt bzw. eines Systems 200a gemäß dem dritten Aspekt.

Das System umfasst ein mobiles Gerät 240, zum Beispiel ein Smartphone, Tablet, ThinClient oder dergleichen, hier vorliegend ein Smartphone, ein Kommunikationssystem 250, einen Server 260, eine Datenbank 270, sowie zumindest eine einen Informationsträger umfassende Verpackung eines Reinigungsmittels 210, eine einen Informationsträger umfassende Textilie 220 und/oder ein einen Informationsträger umfassendes Reinigungsgerät 230.

Die Verpackung des Reinigungsmittels kann zumindest einen Informationsträger, wie beispielsweise einen Aufdruck 211, einen Barcode 212, vorliegend ein Strichcode und/oder einen NFC-Chip 213 umfassen.

Die Textilie 220 kann zumindest einen Informationsträger, wie beispielsweise ein Etikett 221 mit einem Aufdruck oder einem Barcode, und/oder einen NFC-Chip 223 umfassen. Alternativ oder zusätzlich kann das Etikett 221 einen NFC-Chip aufweisen. Ferner kann als Informationsträger die Textilie selber dienen. Vorliegend ist mit dem Bezugszeichen 222 die Struktur anhand einer Maschenform der Textilie 220 schematisch dargestellt. Zum Beispiel kann durch eine Erfassung der Materialstruktur die Information indikativ für einen die Behandlung einer Textilie beeinflussenden Parameter bestimmt werden, wobei die bestimmte Information insbesondere indikativ für mindestens eine Oberflächeneigenschaft der Textilie 220 ist. Dabei kann zum Beispiel eine Textilie in Form eines Kleidungsstücks eine bestimmte Materialstruktur aufweisen, beispielsweise besteht die Textilie 220 unter anderem aus einem Gewebe aus Wolle, Baumwolle oder Kunstfasern. Diese Oberflächeneigenschaft kann beispielsweise als Information bestimmt werden.

Das Reinigungsgerät 230 kann zumindest einen Informationsträger in Form eines Aufdrucks 231 umfassen, wobei der Aufdruck 231 beispielsweise charakteristisch für den Typ des Reinigungsgerätes 230 ist. Weiterhin kann das Reinigungsgerät beispielsweise einen NFC-Chip 233 als Informationsträger umfassen.

Mit dem mobilen Gerät 240 kann beispielsweise eine Information des Reinigungsmittels 210, der Textilie 220 und/oder des Reinigungsgerätes 230 bestimmt werden. Hierfür sind ein optisches Sensorelement 241 und/oder eine NFC-Leseeinrichtung 242 vorgesehen. Das optische Sensorelement 241 ist insbesondere ein optischer Sensor bzw. ein kameraartiges Element.

Das optische Sensorelement 241 erfasst beispielsweise eine Bildinformation des Informationsträgers. Entsprechend kann die Bildinformation des Informationsträgers von dem kameraartigen Element bereitgestellt werden. Die Bildinformation kann zum Ermitteln von mindestens einem Behandlungsparameter zum Beispiel mittels einer Schrifterkennung, wie einer OCR-Erkennung verarbeitet werden. Ferner kann auf dem Informationsträger beispielsweise ein Barcode, wie zum Beispiel ein Strichcode oder ein zweidimensionaler Barcode abgebildet sein.

Das kameraartige Element erfasst den Barcode als Bildinformation, d.h. das kameraartige Element stellt den Barcode als Bildinformation bereit. Mittels einer Barcodeerkennung kann die Bildinformation verarbeitet werden, so dass eine mittels des Barcode kodierte Information bestimmt werden kann.

Mittels der NFC-Leseeinrichtung 242 kann eine Information von einem Informationsträger erfasst werden. Zum Beispiel kann der Informationsträger 213 des Reinigungsmittels 210, der Informationsträger 221 mit NFC-Chip der Textilie 220 und/oder der Informationsträger 233 des Reinigungsgerätes 230 mit der NFC-Lesereinrichtung erfasst werden.

Der mindestens eine ermittelte Behandlungsparameter wird zum Beispiel seitens des mobilen Gerätes und/oder seitens des Reinigungsgerätes 230 von einem Kommunikationssystem 250 erhalten, welches in Verbindung mit dem mobilen Gerät 240, dem Reinigungsgerät 230 und/oder dem Server 260 steht. Der in Verbindung mit dem Kommunikationssystem 250 stehende Server 260 weist eine weitere Kommunikationsverbindung zu einer Datenbank 270 auf. Die Datenbank kann alternativ oder zusätzlich lokal in dem mobilen Gerät 240 implementiert sein. In einem Ausführungsbeispiel ist der Server 260 in Verbindung mit der Datenbank 270 dafür eingerichtet, mindestens einen Behandlungsparameter zumindest teilweise basierend auf der bestimmten Information zu ermitteln. Der Server 260 und optional die Datenbank 270 kann zusätzlich oder alternativ als separate Vorrichtung ausgebildet sein oder auch beispielsweise in dem mobilen Gerät 240 und/oder dem Reinigungsgerät 230 integriert sein.

Repräsentiert die bestimmte Information beispielsweise eine eindeutige Kennung, kann über einen Vergleich der Kennung mit in der Datenbank 270 hinterlegten Informationen mindestens ein Behandlungsparameter ermittelt werden.

Der mindestens eine Behandlungsparameter wird ausgegeben, insbesondere auf der Anzeigevorrichtung 243 des mobilen Geräts 240. Der Benutzer kann dann entsprechend dem ermittelten mindestens einen Behandlungsparameter eine Behandlung auswählen und durchführen. Zusätzlich oder alternativ kann der mindestens eine ermittelte Behandlungsparameter an ein Reinigungsgerät, zum Beispiel Reinigungsgerät 230 ausgeben werden. Beispielsweise übernimmt das Reinigungsgerät 230 eine Reinigungstemperatur und ein Reinigungsprogramm als Voreinstellung basierend auf dem erhaltenen mindestens einen Behandlungsparameter. Zur Übertragung bzw. zum Ausgeben des mindestens einen Behandlungsparameters an eine Vorrichtung gemäß dem zweiten Aspekt, zum Beispiel das mobile Gerät 240 und/oder das Reinigungsgerät 230 kann der mindestens eine Behandlungsparameter über das Kommunikationssystem 250 an die Vorrichtung übertragen werden. Weiterhin kann beispielsweise mittels einer Dosiervorrichtung (nicht dargestellt) des Reinigungsgerätes 230 automatisch eine Reinigungsmittelart und eine Reinigungsmitteldosierung entsprechend dem mindestens einen Behandlungsparameter ausgewählt und zur Behandlung der Textilie verwendet werden. Der Benutzer muss dann lediglich die Behandlung an dem Reinigungsgerät 230, zum Beispiel über ein Bedienelement starten, um eine optimale Reinigung der Textilie durchführen zu lassen. Alternativ kann das Starten der Behandlung über eine Eingabe des Benutzers an der Vorrichtung, zum Beispiel dem mobilen Gerät 240 erfolgen, wobei eine entsprechende Steuerinformation von dem mobilen Gerät 240 zum Beispiel über das Kommunikationssystem 250 an das Reinigungsgerät 230 übermittelt wird. Auf Basis des Steuerbefehls kann die Behandlung der Textilie ohne eine separate Aktion des Benutzers an dem Reinigungsgerät 230 gestartet werden.

Fig. 2b zeigt ein Ausführungsbeispiel von Vorrichtungen gemäß dem zweiten Aspekt bzw. eines Systems 200 gemäß dem dritten Aspekt.

Im Unterschied zu Fig. 2a umfasst das System 200b ein Modul 280b, welches an einem Reinigungsgerät 280a angeordnet ist. Zum Beispiel kann das Reinigungsgerät 280a mit dem Modul 280b nachgerüstet werden. Weiterhin umfasst das System 200b ein Reinigungsgerät 290, welches mit einem gleichartigen Modul ausgerüstet ist, d.h. das Modul ist in dem Reinigungsgerät 290 integriert. Das Modul umfasst vorliegend jeweils ein kameraartiges Element 281, 291 und eine NFC-Leseeinrichtung 282, 292. Eine Anzeigevorrichtung 283, 293 komplettiert jeweils das Modul zur Durchführung des Verfahrens, insbesondere gemäß den Verfahrensansprüchen. Das Modul 280b bzw. das in dem Reinigungsgerät 290 integrierte Modul ist dazu ausgebildet, ein Bestimmen von einer Information indikativ für einen die Behandlung einer Textilie beeinflussenden Parameter durchzuführen. Hierzu kann beispielsweise mittels des kameraartigen Elementes 281, 291 die Information von einem Informationsträger, zum Beispiel Informationsträger 211, 212 des Reinigungsmittels 210, und/oder Informationsträger 221, 222 der Textilie 220 erfasst werden, insbesondere nach der in Bezug auf Fig. 2a ausgeführten Art und Weise.

Das Modul 280b des Reinigungsgerätes 280a weist ebenso wie das in dem Reinigungsgerät 290 integrierte Modul eine Kommunikationsverbindung zu einem von dem System 200b umfassten Kommunikationssystem 250 auf.

Das Kommunikationssystem 250 steht in Verbindung mit dem Modul 280b bzw. dem in dem Reinigungsgerät 290 integrierten Modul und/oder dem Server 260. Der in Verbindung mit dem Kommunikationssystem 250 stehende Server 260 weist eine weitere Kommunikationsverbindung zu einer Datenbank 270 auf. Die Datenbank kann alternativ oder zusätzlich lokal in dem Modul 280b oder dem in dem Reinigungsgerät 290 integrierten Modul implementiert sein. In einem Ausführungsbeispiel ist der Server 260 in Verbindung mit der Datenbank 270 dafür eingerichtet, mindestens einen Behandlungsparameter zumindest teilweise basierend auf der bestimmten Information zu ermitteln, zum Beispiel nach der Art eines Cloud basierten-Systems. Der Server 260 und optional die Datenbank 270 kann zusätzlich oder alternativ als separate Vorrichtung ausgebildet sein oder auch beispielsweise in dem mobilen Gerät 240 und/oder dem Reinigungsgerät 230 integriert sein.

Im Folgenden sind weitere Ausführungsbeispiele aufgeführt, die beispielsweise von Vorrichtungen gemäß dem zweiten Aspekt bzw. eines Systems 200 gemäß dem dritten Aspekt durchgeführt werden können:
Die folgende Tabelle gibt eine exemplarische Übersicht über eine Art von Informationsträger, von dem zumindest eine Information erfasst wird, welche Information von dem Informationsträger bestimmt wird und welcher mindestens eine Behandlungsparameter basierend auf der bestimmten Information ermittelt wird. Anschließend werden einzelne Ausführungsbeispiele, die in der untenstehenden Tabelle mit einer Nummer von 1 bis 5 versehen sind, beispielhaft aufgeführt.

| Ausführungsbeispiel Nummer | Informationsträger von | Bestimmte Information | Ermittelter Behandlungsparameter |
|---|---|---|---|
| 1 | einer Verpackung eines Reinigungsmittels | Zusammensetzung des Reinigungsmittels; (Prognose der) Reinigungsmittelaktivität (Herstelldatum, Alter) | Empfehlung oder Beeinflussung der Reinigungsmitteldosierung (zum Beispiel Menge, Zeitpunkt der Anwendung) und/oder des Reinigungsprogramm (zum Beispiel Temperatur, Dauer) |
| 2 | einer Verpackung eines Reinigungsmittels und einem Reinigungsgerät | Zusammensetzung des Reinigungsmittels; (Prognose der) Reinigungsmittelaktivität (Herstelldatum, Alter); Typ des Reinigungsgerätes | Empfehlung oder Beeinflussung der Reinigungsmitteldosierung (zum Beispiel Menge, Zeitpunkt der Anwendung) und/oder des Reinigungsprogramm (zum Beispiel Temperatur, Dauer) |
| 3 | einer Verpackung eines Reinigungsmittels und einer Textilie | Zusammensetzung des Reinigungsmittels; (Prognose der) Reinigungsmittelaktivität (Herstelldatum, Alter); Typ (zum Beispiel Oberflächeneigenschaft) der Textilie | Empfehlung oder Beeinflussung der Reinigungsmitteldosierung (zum Beispiel Menge, Zeitpunkt der Anwendung) und/oder des Reinigungsprogramm (zum Beispiel Temperatur, Dauer) |
| 4 | einem Reinigungsgerät und einer Textilie | Typ des Reinigungsgerätes; Typ (zum Beispiel Oberflächeneigenschaft) der Textilie | Empfehlung oder Beeinflussung der Reinigungsmittelart, Reinigungsmitteldosierung (zum Beispiel Menge, Zeitpunkt der Anwendung) und/oder des Reinigungsprogramm (zum Beispiel Temperatur, Dauer) |
| 5 | einer Textilie | Pflegehinweise der Textilie | Empfehlung oder Beeinflussung der Reinigungsmitteldosierung (zum Beispiel Menge, Zeitpunkt der Anwendung) und/oder des Reinigungsprogramm (zum Beispiel Temperatur, Dauer) |

### Ausführungsbeispiel 1:

In einem Ausführungsbeispiel, zum Beispiel gemäß einem dritten Aspekt, verfügt ein mobiles Gerät, zum Beispiel das Smartphone 240 nach Fig. 2a, oder ein von einem Reinigungsgerät umfasstes Modul, zum Beispiel Modul 280b nach Fig. 2b oder das in Reinigungsgerät 290 nach Fig. 2b integrierte Modul, über ein Computerprogramm zum Bestimmen von einer Information mit Hilfe einem eingebauten kameraartigen Element und optional weiteren Sensoren. Das Computerprogramm umfasst ein Modul zur Erkennung von Schrift, ein sogenanntes OCR-Modul, womit aus einer Bildinformation eine digitale Repräsentation von verschrifteter Information gewonnen werden kann. Mit Hilfe des kameraartigen Elementes kann beispielsweise ein Foto von einer Verpackung eines Reinigungsmittels, zum Beispiel Reinigungsmittel 210 nach Fig. 2a oder Fig. 2b, im Detail von der Inhaltsbeschreibung als Informationsträger, zum Beispiel Informationsträger 211 nach Fig. 2a oder Fig. 2b aufgenommen werden. Diese erfasste Bildinformation kann in eine digitale Repräsentation umgewandelt werden. Im Detail werden aus der Bildinformation beispielsweise die Haltbarkeit und die Zusammensetzung des Reinigungsmittels herausgelesen, die zur weiteren Indikation verwendet werden kann. Das Computerprogramm kann weiterhin über eine Logik verfügen oder alternativ einen Zugriff auf eine Datenbank, zum Beispiel Datenbank 270 gemäß Fig. 2a oder Fig. 2b, ermöglichen. Auf Basis der Indikation kann eine weiterführende Aktion entsprechend einem ermittelten Behandlungsparameter, wie etwa eine Empfehlung zur zuzuführenden Menge an Reinigungsmittel ausgegeben werden. Bei der Durchführung seitens eines Moduls von einem Reinigungsgerät, zum Beispiel Modul 280b oder das in das Reinigungsgerät 290 integrierte Modul nach Fig. 2b, kann beispielsweise neben der Auswahl und Zugabe einer Menge an Reinigungsmittel auf Basis des ermittelten Behandlungsparameters die Temperatur, die Wahl des Reinigungsprogramms, der Zeitpunkt der Zugabe des Reinigungsmittels oder eine Kombination hiervon beeinflusst werden. Die Beeinflussung kann beispielsweise über eine im Modul des Reinigungsgerätes oder in dem Reinigungsgerät integrierte Anzeigevorrichtung, zum Beispiel Anzeigevorrichtung 283, 293 nach Fig. 2b ausgegeben werden. Alternativ oder zusätzlich kann das Reinigungsgerät beispielsweise über einen Schaltkreis in Verbindung mit dem Modul stehende Leuchtdioden die zuzuführende Menge an Reinigungsmittel anzeigen.

Ein weiteres Ausführungsbeispiel sieht vor, dass das mobile Gerät oder ein von einem Reinigungsgerät umfasstes Modul über ein Computerprogramm verfügt, das ein Erfassen einer Information mittels NFC unterstützt. Beispielsweise kann eine Information über die Haltbarkeit und die Zusammensetzung des Reinigungsmittels in Form eines NFC-Chips, zum Beispiel NFC-Chip 213 nach Fig. 2, gespeichert sein und entsprechend beispielsweise mittels einer drahtlosen Übertragung auf das mobile Gerät oder das von einem Reinigungsgerät umfasste Modul übertragen werden. Das mobile Gerät oder das von einem Reinigungsgerät umfasste Modul kann über eine NFC-Leseeinrichtung verfügen, zum Beispiel NFC-Lesereinrichtung 242 nach Fig. 2a oder 282, 292 nach Fig. 2b. Das Computerprogramm kann weiterhin über eine Logik verfügen oder alternativ einen Zugriff auf eine Datenbank, zum Beispiel Datenbank 270 gemäß Fig. 2a oder Fig. 2b, ermöglichen. Auf Basis der Indikation kann eine weiterführende Aktion entsprechend einem ermittelten Behandlungsparameter, wie etwa eine ideelle und individuelle Empfehlung eines Reinigungsprogramms ausgegeben werden.

In einem weiteren Ausführungsbeispiel verfügt das mobile Gerät oder das von einem Reinigungsgerät umfasste Modul über ein Computerprogramm, welches ein Bestimmen von mindestens einer Information mit Hilfe von einem kameraartigen Element und optional weiteren Sensoren unterstützt. Das Computerprogramm umfasst beispielsweise ein Modul zur Erkennung von einem Barcode. Der Barcode kann beispielsweise eine Information über eine Zusammensetzung eines Reinigungsmittels und/oder eine Haltbarkeit des Reinigungsmittels repräsentieren. Alternativ kann das mobile Gerät oder das von einem Reinigungsgerät umfasste Modul über eine drahtlose Verbindung zu einem Kommunikationssystem, wie zum Beispiel dem Internet, verfügen. Beispielsweise kann der Barcode einen Produktcode repräsentieren, so dass über den Produktcode eine Information über eine Zusammensetzung eines Reinigungsmittels und/oder eine Haltbarkeit des Reinigungsmittels über das Internet herunter ladbar sind. Durch eine integrierte Logik und/oder mit Hilfe einer Datenbank, zum Beispiel Datenbank 270 nach Fig. 2, kann mindestens ein Behandlungsparameter ermittelt werden, um beispielsweise eine weiterführende Aktion auf Basis des mindestens einen Behandlungsparameters zu setzen.

### Ausführungsbeispiel 2:

In einem Ausführungsbeispiel, zum Beispiel gemäß einem dritten Aspekt, verfügt ein mobiles Gerät, zum Beispiel das Smartphone 240 nach Fig. 2a oder ein Tablet, über ein Computerprogramm. Es wird eine Verpackung eines Reinigungsmittels, zum Beispiel Reinigungsmittel 210 nach Fig. 2a nach zumindest der vorstehend bereits erläuterten Möglichkeiten gemäß OCR, NFC oder Barcode erfasst. Zudem wird mittels eines in einem Reinigungsgerät integrierten NFC-Chip, zum Beispiel NFC-Chip 233 nach Fig. 2 und einer NFC-Leseeinrichtung, zum Beispiel NFC-Leseeinrichtung 242 nach Fig. 2a, der Typ des Reinigungsgerätes bestimmt. Das Computerprogram, ausgeführt und/oder gesteuert zum Beispiel auf dem mobilen Gerät 240, umfasst eine Logik über eine zum Beispiel vorgegeben Datenbank, um mit der zuvor bestimmten Information zum Reinigungsmittel und der Information zum Typ des Reinigungsgerätes mindestens einen Behandlungsparameter zu ermitteln. Entsprechend dem bestimmten Behandlungsparameter kann beispielsweise eine Empfehlung an einen Benutzer bezüglich der Dauer und Art des zu wählenden Reinigungsprogramms des Reinigungsgerätes abgegeben werden, zum Beispiel durch ein Ausgeben des mindestens einen Behandlungsparameters auf einer Anzeigevorrichtung des mobilen Gerätes.

Ein weiteres Ausführungsbeispiel sieht vor, dass das mobile Gerät über ein Computerprogramm verfügt, mittels welchem und mittels eines vom dem mobilen Gerät umfassten kameraartigen Elements eine Information indikativ für zumindest einen die Behandlung einer Textilie beeinflussenden Parameter bestimmt wird. Das Computerprogramm umfasst beispielsweise ein Modul zur Erkennung von Schrift, ein OCR-Modul, womit aus einer erfassten Bildinformation eine digitale Repräsentation von verschrifteten Informationen gewonnen werden kann. Mit Hilfe des kameraartigen Elementes kann beispielsweise ein Foto von einem Reinigungsgerät, im Detail beispielsweise von der einem auf dem Reinigungsgerät aufgebrachten Typenschild (zum Beispiel Marke und Modell), zum Beispiel Informationsträger 231 nach Fig. 2a aufgenommen. Diese erfasste Bildinformation kann in eine digitale Repräsentation umgewandelt werden. Aus der wie in einem der vorstehend angeführten Ausführungsbeispiele ausgeführten Art einer bestimmten Information, die von einem Informationsträger eines Reinigungsmittels erfasst wird, und der weiteren bestimmten Information zum Typ des Reinigungsgerätes wird über eine in dem Computerprogramm integrierte Logik oder eine vorgegebene Datenbank, zum Beispiel Datenbank 270 nach Fig. 2a mindestens ein Behandlungsparameter ermittelt. Beispielsweise kann auf Basis des ermittelten Behandlungsparameters eine Empfehlung an einen Benutzer bezüglich der Menge eines zuzuführenden Reinigungsmittels ausgegeben werden.

### Ausführungsbeispiel 3:

In einem Ausführungsbeispiel, zum Beispiel gemäß einem dritten Aspekt, verfügt ein mobiles Gerät, zum Beispiel das Smartphone 240 nach Fig. 2a, oder ein von einem Reinigungsgerät umfasstes Modul, zum Beispiel Modul 280b nach Fig. 2b oder das in Reinigungsgerät 290 nach Fig. 2b integrierte Modul, über ein Computerprogramm, mittels welchem und einer vom dem mobilen Gerät oder dem von dem Reinigungsgerät umfassten Modul, umfassten kameraartigen Element eine Information indikativ für zumindest einen die Behandlung einer Textilie beeinflussenden Parameter bestimmt wird. Es wird eine Verpackung eines Reinigungsmittels, zum Beispiel Reinigungsmittel 210 nach Fig. 2a oder Fig. 2b nach zumindest der vorstehend bereits erläuterten Möglichkeiten gemäß OCR, NFC oder Barcode erfasst. Das Computerprogramm umfasst beispielsweise ein Modul zur Analyse von Textur und Farbe einer Textilie aus einer Bildinformation, welche mi dem kameraartigen Element erfasst werden kann. Aus der Bildinformation kann eine Schätzung der Farbe und/oder von einer Oberflächeneigenschaft der Textilie gewonnen werden. Aus dem wie bereits vorstehend ausgeführten Bestimmen von einer Information, die von einem Informationsträger einer Verpackung eines Reinigungsmittels erfasst wird, und der bestimmten Information, die von der Textilie erfasst wird, wird über eine in dem Computerprogramm integrierte Logik oder eine vorgegebene Datenbank, zum Beispiel Datenbank 270 nach Fig. 2a oder Fig. 2b mindestens ein Behandlungsparameter ermittelt. Beispielsweise kann auf Basis des ermittelten Behandlungsparameters eine Empfehlung an einen Benutzer bezüglich der Menge eines zuzuführenden Reinigungsmittels ausgegeben werden. Alternativ oder zusätzlich kann das Reinigungsgerät beispielsweise über einen Schaltkreis in Verbindung mit dem Modul stehende Leuchtdioden die zuzuführende Menge an Reinigungsmittel anzeigen.

In einem weiteren Ausführungsbeispiel gemäß vorstehendem Ausführungsbeispiel 3, jedoch ohne in dem Computerprogramm integrierte Logik oder eine vorgegebene Datenbank in dem mobilen Gerät kann mittels einer bestimmten Information, die beispielsweise einen Produktcode repräsentiert, das Ermitteln des mindestens einen Behandlungsparameters über ein Herunterladen dieser Informationen beispielsweise aus dem Internet auf Basis der den Produktcode repräsentierenden Information erfolgen.

Gemäß einem weiteren Ausführungsbeispiel verfügt ein mobiles Gerät, zum Beispiel das Smartphone 240 nach Fig. 2a, oder ein von einem Reinigungsgerät umfasstes Modul, zum Beispiel Modul 280b nach Fig. 2b oder das in Reinigungsgerät 290 nach Fig. 2b integrierte Modul, über ein Computerprogramm, welches ein Bestimmen von einer Information mit Hilfe von einem eingebauten kameraartigen Element, einer eingebauten NFC-Leseeinrichtung und optional weiteren Sensoren unterstützt. Das Computerprogramm weist eine der vorstehend ausgeführten Module zum Bestimmen einer Information mittels eines Auslesens eines NFC-Chips, einer OCR-Erkennung und/oder einem Auslesen eines Barcodes. Weiterhin kann das Computerprogramm ein Modul zum Bestimmen einer Information über zum Beispiel Textur und/oder Farbe einer Textilie umfassen, wobei die Information von einem NFC-Chip der Textilie ermittelt werden kann. Hierzu kann beispielsweise ein NFC-Chip in einer jeweiligen Textilie integriert sein, der zum Beispiel mittels einer NFC-Leseeinrichtung, wie etwa NFC-Leseeinrichtung 242 nach Fig. 2 des mobilen Gerätes 240 ausgelesen werden kann. Wird weiterhin eine Information von einem Informationsträger eines Reinigungsmittels erfasst, kann aus der bestimmten Information des Reinigungsmittels und der bestimmten Information der Textilie mindestens ein Behandlungsparameter ermittelt werden. Der ermittelte Behandlungsparameter kann beispielsweise indikativ für eine Empfehlung an einen Benutzer und/oder eine Beeinflussung des Reinigungsgerätes durch das Modul hinsichtlich der Dauer und der Art eines zu wählenden bzw. durchzuführenden Reinigungsprogramms eines Reinigungsgerätes sein. Entsprechend kann das Reinigungsgerät auf Basis des ermittelten Behandlungsparameters beispielsweise eine automatische Einstellung von Reinigungstemperatur und/oder Reinigungsprogramms veranlassen.

In einem weiteren Ausführungsbeispiel verfügt ein mobiles Gerät, zum Beispiel das Smartphone 240 nach Fig. 2a, oder ein von einem Reinigungsgerät umfasstes Modul, zum Beispiel Modul 280b nach Fig. 2b oder das in Reinigungsgerät 290 nach Fig. 2b integrierte Modul, über ein Computerprogramm, welches ein Bestimmen von einer Information mit Hilfe von einem eingebauten kameraartigen Element, einer eingebauten NFC-Leseeinrichtung und optional weiteren Sensoren unterstützt. Das Computerprogramm weist eine der vorstehend ausgeführten Module zum Bestimmen einer Information mittels eines Auslesens eines NFC-Chips, einer OCR-Erkennung und/oder einem Auslesen eines Barcodes. Mittels des kameraartigen Elementes kann beispielsweise ein Foto erfasst werden, welches als eine Bildinformation in einer digitalen Repräsentation vorliegt. Im Detail kann die erfasste Bildinformation insbesondere eine digitale Repräsentation eines Etiketts von einer Textilie umfassen. Aus der erfassten Bildinformation des Etiketts kann beispielsweise ein Pflegehinweis der Textilie gewonnen werden, beispielsweise indem die Bildinformation mittels einer OCR-Erkennung verarbeitet wird. Das Computerprogramm verfügt beispielsweise über eine Logik oder über eine vorgegebene Datenbank, die beispielsweise von dem mobilen Gerät umfasst ist, um auf Basis der bestimmten Information mindestens einen Behandlungsparameter zu ermitteln. Als Beispiel kann der ermittelte Behandlungsparameter beispielsweise indikativ für eine Empfehlung zur zuzuführenden Menge an Reinigungsmittel, eine Reinigungsmitteldosierung sein.

### Ausführungsbeispiel 4:

In einem Ausführungsbeispiel, zum Beispiel gemäß einem dritten Aspekt, verfügt ein mobiles Gerät, zum Beispiel das Smartphone 240 nach Fig. 2a, über ein Computerprogramm, welches ein Bestimmen von einer Information mit Hilfe von einem eingebauten kameraartigen Element und optional weiteren Sensoren unterstützt. Das Computerprogramm weist eine der vorstehend aufgeführten Module zum Bestimmen einer Information mittels eines Auslesens eines NFC-Chips, einer OCR-Erkennung und/oder einem Auslesen eines Barcodes auf. Eine Information wird von einem Informationsträger einer Textilie, zum Beispiel von einem NFC-Chip 223 bestimmt. Alternativ oder zusätzlich kann mittels des kameraartigen Elementes eine Bildinformation von der Textilie bereitgestellt werden. Die derart bestimmte Information kann beispielsweise indikativ für eine Oberflächeneigenschaft der Textilie sein. Aus der Summe der bestimmten Informationen von der Textilie und beispielsweise von einem Reinigungsgerät kann mindestens ein Behandlungsparameter, zum Beispiel durch das Computerprogramm ermittelt werden. Hierzu kann beispielsweise eine von dem Computerprogramm umfasste Logik oder Datenbank basierend auf dem mindestens einen ermittelten Behandlungsparameter ein Ausgeben oder Auslösen des Ausgebens des mindestens einen Behandlungsparameters herbeigeführt werden. Der mindestens eine Behandlungsparameter kann in diesem Fall beispielsweise indikativ für eine Empfehlung an einen Benutzer hinsichtlich der Reinigungsdauer und des Reinigungsprogramms sein.

### Ausführungsbeispiel 5:

Gemäß einem Ausführungsbeispiel, zum Beispiel gemäß einem dritten Aspekt, verfügt ein mobiles Gerät, zum Beispiel das Smartphone 240 nach Fig. 2a, oder ein von einem Reinigungsgerät umfasstes Modul, zum Beispiel Modul 280b nach Fig. 2b oder das in Reinigungsgerät 290 nach Fig. 2b integrierte Modul, über ein Computerprogramm, welches ein Bestimmen von einer Information mit Hilfe von einem eingebauten kameraartigen Element und optional weiteren Sensoren unterstützt. Das Computerprogramm umfasst beispielsweise ein Modul zur Analyse von Textur und Farbe einer Textilie aus einer Bildinformation, welche mit dem kameraartigen Element erfasst werden kann. Aus der Bildinformation kann eine Schätzung der Farbe und/oder von einer Oberflächeneigenschaft der Textilie gewonnen werden. Das Computerprogramm kann zum Beispiel mittels einer Kommunikationsschnittstelle des mobilen Gerätes oder mittels einer Kommunikationsschnittstelle des von dem Reinigungsgerät umfassten Moduls über ein Kommunikationssystem, zum Beispiel Kommunikationssystem 250 gemäß Fig. 2a oder Fig. 2b, eine Kommunikationsverbindung zu einer Cloud, beispielsweise bereitgestellt durch einen Server und eine Datenbank (zum Beispiel Server 260 und Datenbank 270 nach Fig. 2a oder Fig. 2b) herstellen. Derart können eine oder mehrere weitere Information indikativ zu Pflegehinweisen der Textilie und/oder anderen Eigenschaften der Textilie bestimmt werden. Auf Basis zumindest dieser bestimmten Informationen kann mindestens ein Behandlungsparameter ermittelt werden. Aus dem ermittelten Behandlungsparameter kann eine Aktion abgeleitet werden. Als Beispiel kann beispielsweise der ermittelte Behandlungsparameter indikativ für eine Empfehlung einer Reinigungsmitteldosierung sein. Weiterhin kann eine Beeinflussung beispielsweise über eine im Modul des Reinigungsgerätes oder eine in dem Reinigungsgerät integrierte Anzeigevorrichtung, zum Beispiel Anzeigevorrichtung 283, 293 nach Fig. 2b ausgegeben werden. Alternativ oder zusätzlich kann das Reinigungsgerät beispielsweise über einen Schaltkreis in Verbindung mit dem Modul stehende Leuchtdioden die zuzuführende Menge an Reinigungsmittel anzeigen. Auf Basis dieser Anzeige der Reinigungsmitteldosierung durch die Leuchtdioden kann anschließend ein Benutzer beispielsweise manuell die entsprechende Menge an Reinigungsmittel zuführen.

Gemäß einem weiteren Ausführungsbeispiel wird die Information von einem Informationsträger einer Textilie, wobei der Informationsträger einen NFC-Chip umfasst, bestimmt. Hierzu wird zum Bestimmen der Information mindestens eine NFC-Leseeinrichtung verwendet. Die derart bestimmte Information kann indikativ für zumindest einen Pflegehinweis der Textilie sein. Über eine in einem Computerprogramm integrierte Logik der Vorrichtung, zum Beispiel das mobile Gerät 240 nach Fig. 2a oder das Modul 280b des Reinigungsgerätes 280a nach Fig. 2b oder das in das Reinigungsgerät 290 integrierte Modul nach Fig. 2b, oder eine vorgegebene Datenbank, die beispielsweise von der Vorrichtung umfasst sein kann, oder nach der Art einer Cloud mittels der Vorrichtung über ein Kommunikationssystem (zum Beispiel Kommunikationssystem 250 nach Fig. 2a oder Fig. 2b) abfragbar ist, kann mindestens ein Behandlungsparameter ermittelt werden. Der ermittelte Behandlungsparameter kann in diesem Fall beispielsweise indikativ für eine Empfehlung einer Reinigungsmitteldosierung sein.

Ein weiteres Ausführungsbeispiel sieht vor, ein mobiles Gerät, zum Beispiel das Smartphone 240 nach Fig. 2a, oder ein von einem Reinigungsgerät umfasstes Modul, zum Beispiel Modul 280b nach Fig. 2b oder das in Reinigungsgerät 290 nach Fig. 2b integrierte Modul, über ein Computerprogramm, welches ein Bestimmen von einer Information unterstützt, verfügt. Das Computerprogramm umfasst einen sogenannten Template-Matching-Algorithmus, insbesondere um ein auf einem Etikett einer Textilie aufgedrucktes Symbol in eine digitale Form zu überführen. Mittels einer internen Logik des Computerprogramm oder mittels einer vorgegebenen Datenbank kann eine Information indikativ zum Beispiel für eine Oberflächeneigenschaft der Textilie entsprechend dem Symbol bestimmen zu können. Zum Bestimmen kann beispielsweise ein Abgleichen der digitalen Form des Symbols mittels einer Segmentierung und einer Normalized Cross Correlation (NCC) erfolgen.

Ein Beispiel für Segmentierung ist, dass man ein Foto von dem Etikett macht, und dann z.B. Maximally Stable Extremal Regions (MSER) verwendet. Hierbei wird ein Bild so verarbeitet, dass dunkle von hellen Regionen und helle von dunklen Regionen unterschieden werden. Angenommen das Etikett ist schwarz, dann wird der Aufdruck hell sein und vice versa. Der Algorithmus ermöglicht es, die Regionen aufzufinden. Dies ist eine Art der Segmentierung, wobei ein spezielles Segment oder ein spezieller Teil eines Bildes identifiziert wird, bzw. generell ein Bild in Teile aufteilt wird. Mindestens ein Behandlungsparameter der Textilie wird zumindest teilweise basierend auf der bestimmten Information ermittelt. Der mindestens eine Behandlungsparameter kann beispielsweise indikativ für eine Empfehlung an einen Benutzer einer Reinigungsdauer, und eines Reinigungsprogramms bzw. Art des zu wählenden Reinigungsprogramms sein.

NCC bedeutet das Anwenden einer 2D Funktion auf die Pixelwerte eines Bildes. Wird die Funktion auf mathematischer Ebene betrachtet, ergibt die Funktion quasi einen Wert von 1 wenn eine perfekte Übereinstimmung gefunden wird, und einen Wert von -1, wenn eine komplett komplementäre Vergleichsmenge vorliegt (also 1 wenn ein weißes Logo auf schwarzem Hintergrund in dem Bild vorliegt, und dasselbe in der Datenbank, und -1 wenn schwarzes Logo auf weißem Hintergrund, aber weißes Logo auf schwarzem Hintergrund in der Datenbank). In der Praxis ergeben sich auf Grund von Bildstörungen nie Werte von 1 oder -1. Abhängig von dem aktuellen Vergleich sind Werte jenseits der +0.9 oder -0.9 üblicherweise ein Anhaltspunkt für die Präsenz eines Symbols.

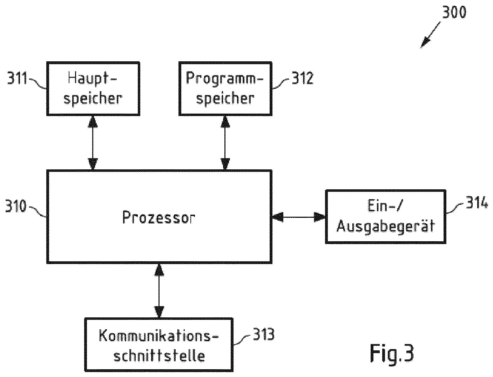

Fig. 3 zeigt ein Blockdiagramm eines Ausführungsbeispiels einer Vorrichtung 300, welche insbesondere ein beispielhaftes Verfahren gemäß dem ersten Aspekt ausführen kann. Die Vorrichtung 300 ist beispielsweise eine Vorrichtung gemäß dem zweiten oder ein System gemäß dem dritten Aspekt.

Die Vorrichtung 300 kann insofern beispielsweise ein Computer, ein Desktop-Computer, ein Server, ein Thinclient oder ein tragbarer Computer (Mobilgerät), wie etwa ein Laptop-Computer, ein Tablet-Computer, ein persönlicher digitaler Assistent (PDA) oder ein Smartphone sein. Die Vorrichtung kann beispielsweise die Funktion eines Servers oder eines Clients erfüllen. Die Vorrichtung 300 kann weiterhin an einem Reinigungsgerät anordenbar sein, wobei beispielsweise die Vorrichtung 300 derart an einem Reinigungsgerät anordenbar ist, dass eine Steuerung bzw. Regelung von Funktionen des Reinigungsgerätes mit der Vorrichtung 300 möglich ist. Hierzu ist die Vorrichtung 300 beispielsweise über eine drahtgebundene und/oder eine drahtlose Kommunikationsverbindung mit einer Steuereinheit des Reinigungsgerätes verbindbar.

Prozessor 310 der Vorrichtung 300 ist insbesondere als Mikroprozessor, Mikrokontrolleinheit, Mikrocontroller, digitaler Signalprozessor (DSP), Anwendungsspezifische Integrierte Schaltung (ASIC) oder Field Programmable Gate Array (FPGA) ausgebildet.

Prozessor 310 führt Programmanweisungen aus, die in Programmspeicher 312 gespeichert sind, und speichert beispielsweise Zwischenergebnisse oder ähnliches in Arbeits- oder Hauptspeicher 311. Zum Beispiel ist Programmspeicher 312 ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Hauptspeicher 311 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Programmspeicher 312 ist vorzugsweise ein lokaler mit der Vorrichtung 400 fest verbundener Datenträger. Mit der Vorrichtung 300 fest verbundene Datenträger sind beispielsweise Festplatten, die in die Vorrichtung 300 eingebaut sind. Alternativ kann der Datenträger beispielsweise auch ein mit der Vorrichtung 300 trennbar verbindbarer Datenträger sein wie ein Speicher-Stick, ein Wechseldatenträger, eine tragbare Festplatte, eine CD, eine DVD und/oder eine Diskette.

Programmspeicher 312 enthält beispielsweise das Betriebssystem von der Vorrichtung 300, das beim Starten der Vorrichtung 300 zumindest teilweise in Hauptspeicher 311 geladen und vom Prozessor 310 ausgeführt wird. Insbesondere wird beim Starten von Vorrichtung 300 zumindest ein Teil des Kerns des Betriebssystems in den Hauptspeicher 311 geladen und von Prozessor 310 ausgeführt. Das Betriebssystem von Vorrichtung 300 ist beispielsweise ein Windows -, UNIX-, Linux-, Android-, Apple iOS- und/oder MAC-Betriebssystem.

Das Betriebssystem ermöglicht insbesondere die Verwendung der Vorrichtung 300 zur Datenverarbeitung. Es verwaltet beispielsweise Betriebsmittel wie Hauptspeicher 311 und Programmspeicher 312, Netzwerkschnittstelle 313, Ein- und Ausgabegerät 314, stellt unter anderem durch Programmierschnittstellen anderen Programmen grundlegende Funktionen zur Verfügung und steuert die Ausführung von Programmen.

Prozessor 310 steuert die Kommunikationsschnittstelle 313, welche beispielsweise eine Netzwerkschnittstelle sein kann und als Netzwerkkarte, Netzwerkmodul und/oder Modem ausgebildet sein kann. Die Kommunikationsschnittstelle 313 ist insbesondere dazu eingerichtet, eine Verbindung der Vorrichtung 300 mit anderen Vorrichtungen, insbesondere über ein (drahtloses) Kommunikationssystem, beispielsweise ein Netzwerk, herzustellen und mit diesen zu kommunizieren. Die Kommunikationsschnittstelle 313 kann beispielsweise Daten (über das Kommunikationssystem) empfangen und an Prozessor 310 weiterleiten und/oder Daten von Prozessor 310 empfangen und (über das Kommunikationssystem) senden. Beispiele für ein Kommunikationssystem sind ein lokales Netzwerk (LAN), ein großräumiges Netzwerk (WAN), ein drahtloses Netzwerk (beispielsweise gemäß dem IEEE-802.11-Standard, dem Bluetooth (LE)-Standard und/oder dem NFC-Standard), ein drahtgebundenes Netzwerk, ein Mobilfunknetzwerk, ein Telefonnetzwerk und/oder das Internet.

Des Weiteren kann Prozessor 310 zumindest ein Ein-/Ausgabegerät 314 steuern. Ein-/Ausgabegerät 314 ist beispielsweise eine Tastatur, eine Maus, eine Anzeigeeinheit, ein Mikrofon, eine berührungsempfindliche Anzeigeeinheit, ein Lautsprecher, ein Lesegerät, ein Laufwerk und/oder eine Kamera. Ein-/Ausgabegerät 314 kann beispielsweise Eingaben eines Benutzers aufnehmen und an Prozessor 310 weiterleiten und/oder Informationen für den Benutzer von Prozessor 310 empfangen und ausgeben.

Die in dieser Spezifikation beschriebenen Ausführungsbeispiele der vorliegenden Erfindung und die diesbezüglich jeweils angeführten optionalen Merkmale und Eigenschaften sollen auch in allen Kombinationen miteinander offenbart verstanden werden. Insbesondere soll auch die Beschreibung eines von einem Ausführungsbeispiel umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Die Verwendung des unbestimmten Artikels schließt eine Mehrzahl nicht aus. Eine einzelne Vorrichtung kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

## Patentansprüche

1. Verfahren durchgeführt von einer oder mehreren Vorrichtungen, umfassend:
- Bestimmen von einer Information indikativ für zumindest einen die Reinigungsbehandlung einer Textilie (220) beeinflussenden Parameter, wobei die Information von einem Informationsträger (211, 212, 213, 221, 222, 223, 231, 233) eines Reinigungsmittels (210) und der Textilie (220), oder eines Reinigungsmittels (210) und eines Reinigungsgerätes, oder eines Reinigungsmittels (210) und der Textilie (220) und des Reinigungsgerätes erfasst wird und der Informationsträger (211, 212, 213, 221, 222, 223, 231, 233) eine Verpackung, ein Etikett, einen NFC-Chip oder eine Kombination hiervon umfasst;
- Ermitteln von mindestens einem Behandlungsparameter der Textilie (220) zumindest teilweise basierend auf der bestimmten Information;
- Durchführen oder Veranlassung der Durchführung einer Reinigungsbehandlung der Textilie (220) entsprechend dem mindestens einen ermittelten Behandlungsparameter mittels mindestens eines Reinigungsgerätes (230, 280a, 290); und
- Ausgeben oder Auslösen des Ausgebens des mindestens einen ermittelten Behandlungsparameters.

2. Verfahren nach Anspruch 1, wobei zur Bestimmung der Information (211, 212, 213, 221, 222, 223, 231, 233) mindestens ein optisches Sensorelement und/oder eine NFC-Leseeinrichtung (242, 282, 292) verwendet wird.

3. Verfahren nach Anspruch 2, wobei das mindestens eine optische Sensorelement mindestens ein kameraartiges Element (241, 281, 291) umfasst und eine Bildinformation von dem Informationsträger (211, 212, 221, 222, 231) bereitstellt.

4. Verfahren nach Anspruch 3, wobei zum Ermitteln von mindestens einem Behandlungsparameter der Textilie(220) die Bildinformation mittels einer Schrifterkennung verarbeitet wird.

5. Verfahren nach Anspruch 3 oder Anspruch 4, wobei zum Ermitteln von mindestens einem Behandlungsparameter der Textilie (220) die Bildinformation mittels einer Barcodeerkennung verarbeitet wird.

6. Verfahren nach einem der Ansprüche 2 bis 5, wobei die NFC-Leseeinrichtung (242, 282, 292) gemäß dem NFC-Standard betrieben wird.

7. Verfahren nach einem der vorhergehenden Ansprüche, wobei die Information indikativ für eine Zusammensetzung eines Reinigungsmittels (210), eine Haltbarkeitsdauer eines Reinigungsmittels (210) oder eine Kombination hiervon ist.

8. Verfahren nach einem der vorhergehenden Ansprüche, wobei die Information indikativ für zumindest eine Oberflächeneigenschaft der Textilie (220) ist.

9. Verfahren nach einem der vorhergehenden Ansprüche, wobei die Information indikativ für einen Typ eines Reinigungsgerätes (230) ist.

10. Verfahren nach einem der vorhergehenden Ansprüche, wobei der mindestens eine Behandlungsparameter indikativ für eine Empfehlung bzw. Beeinflussung einer Reinigungsmittelart, Reinigungstemperatur, Reinigungsdauer, Reinigungsmitteldosierung, eines Zeitpunktes zur Anwendung des Reinigungsmittels, eines Reinigungsprogramms oder eine Kombination hiervon ist.

11. Vorrichtung, welche dazu eingerichtet ist oder entsprechende Mittel umfasst, ein Verfahren nach einem vorhergehenden Ansprüche durchzuführen und/oder zu steuern.

12. Computerprogramm, das Programmanweisungen umfasst, die einen Prozessor zur Ausführung und/oder Steuerung eines Verfahrens gemäß einem der Verfahrensansprüche veranlassen, wenn das Computerprogramm auf dem Prozessor läuft.

## Claims

1. A method carried out by one or more devices, comprising:
- determining information indicative of at least one parameter influencing the cleaning treatment of a textile (220), wherein the information is acquired from an information carrier (211, 212, 213, 221, 222, 223, 231, 233) of a cleaning agent (210) and the textile (220), or of a cleaning agent (210) and a cleaning device, or of a cleaning agent (210) and the textile (220) and the cleaning device, and the information carrier (211, 212, 213, 221, 222, 223, 231, 233) comprises a package, a label, an NFC chip, or a combination thereof;
- establishing at least one treatment parameter of the textile (220) based at least partially on the determined information;
- carrying out a cleaning treatment of the textile (220) or causing said treatment to be carried out according to the at least one established treatment parameter by means of at least one cleaning device (230, 280a, 290); and
- outputting or triggering output of the at least one established treatment parameter.

2. The method according to claim 1, wherein at least one optical sensor element and/or an NFC reading device (242, 282, 292) is used to determine the information (211, 212, 213, 221, 222, 223, 231, 233).

3. The method according to claim 2, wherein the at least one optical sensor element comprises at least one camera-like element (241, 281, 291) and provides image information from the information carrier (211, 212, 221, 222, 231).

4. The method according to claim 3, wherein the image information is processed by means of character recognition in order to establish at least one treatment parameter of the textile (220).

5. The method according to claim 3 or claim 4, wherein the image information is processed by means of barcode recognition in order to establish at least one treatment parameter of the textile (220).

6. The method according to one of claims 2 to 5, wherein the NFC reading device (242, 282, 292) is operated in accordance with the NFC standard.

7. The method according to one of the preceding claims, wherein the information is indicative of a composition of a cleaning agent (210), a shelf life of a cleaning agent (210), or a combination thereof.

8. The method according to one of the preceding claims, wherein the information is indicative of at least one surface property of the textile (220).

9. The method according to one of the preceding claims, wherein the information is indicative of a type of cleaning device (230).

10. The method according to one of the preceding claims, wherein the at least one treatment parameter is indicative of a recommendation or impact of a type of cleaning agent, cleaning temperature, cleaning duration, cleaning agent dosage, a point in time for using the cleaning agent, a cleaning program, or a combination thereof.

11. A device that is designed or comprises corresponding means for carrying out and/or controlling a method according to one of the preceding claims.

12. A computer program comprising program instructions that prompt a processor to execute and/or control a method according to one of the method claims when the computer program runs on the processor.

## Revendications

1. Procédé mis en œuvre par un ou plusieurs dispositifs, comprenant :
- la détermination d'informations indiquant au moins un paramètre influençant le traitement de nettoyage d'un textile (220), les informations étant collectées depuis un support d'informations (211, 212, 213, 221, 222, 223, 231, 233) d'un agent de nettoyage (210) et du textile (220), ou d'un agent de nettoyage (210) et d'un appareil de nettoyage, ou d'un agent de nettoyage (210) et du textile (220) et de l'appareil de nettoyage, et le support d'informations (211, 212, 213, 221, 222, 223, 231, 233) comprenant un emballage, une étiquette, une puce NFC ou une combinaison de ceux-ci ;
- la détermination d'au moins un paramètre de traitement du textile (220) sur la base au moins en partie des informations déterminées ;
- la mise en oeuvre ou le lancement de la mise en oeuvre d'un traitement de nettoyage du textile (220) conformément à l'au moins un paramètre de traitement déterminé au moyen d'au moins un appareil de nettoyage (230, 280a, 290) ; et
- la sortie ou le déclenchement de la sortie de l'au moins un paramètre de traitement déterminé.

2. Procédé selon la revendication 1, dans lequel au moins un élément de capteur optique et/ou un système de lecture NFC (242, 282, 292) sont utilisés pour déterminer les informations (211, 212, 213, 221, 222, 223, 231, 233).

3. Procédé selon la revendication 2, dans lequel l'au moins un élément de capteur optique comprend au moins un élément de type caméra (241, 281, 291) et fournit des informations d'image provenant du support d'informations (211, 212, 221, 222, 231).

4. Procédé selon la revendication 3, dans lequel les informations d'image sont traitées au moyen d'une reconnaissance d'écriture pour déterminer au moins un paramètre de traitement du textile (220).

5. Procédé selon la revendication 3 ou la revendication 4, dans lequel les informations d'image sont traitées au moyen d'une reconnaissance de code à barres pour déterminer au moins un paramètre de traitement du textile (220).

6. Procédé selon l'une des revendications 2 à 5, dans lequel le système de lecture NFC (242, 282, 292) fonctionne selon la norme NFC.

7. Procédé selon l'une des revendications précédentes, dans lequel les informations indiquent une composition d'un agent de nettoyage (210), une durée de conservation d'un agent de nettoyage (210) ou une combinaison de celles-ci.

8. Procédé selon l'une des revendications précédentes, dans lequel les informations indiquent au moins une propriété de surface du textile (220).

9. Procédé selon l'une des revendications précédentes, dans lequel les informations indiquent un type d'appareil de nettoyage (230).

10. Procédé selon l'une des revendications précédentes, dans lequel l'au moins un paramètre de traitement indique une recommandation ou une influence d'une catégorie d'agent de nettoyage, d'une température de nettoyage, d'une durée de nettoyage, d'un dosage d'agent de nettoyage, d'un temps d'utilisation de l'agent de nettoyage, d'un programme de nettoyage ou une combinaison de ceux-ci.

11. Dispositif, lequel est conçu, ou comprend des moyens correspondants, pour mettre en oeuvre et/ou commander un procédé selon l'une des revendications précédentes.

12. Programme informatique comprenant des instructions de programme qui amènent un processeur à exécuter et/ou à commander un procédé selon l'une des revendications de procédé lorsque le programme informatique s'exécute sur le processeur.
